# EUROPÄISCHE PATENTANMELDUNG

(11) **EP 3 940 012 A1**
(43) Veröffentlichungstag der Anmeldung: **19.01.2022**
(21) Anmeldenummer: 21183148.2
(22) Anmeldetag: 01.07.2021
(51) Int. Cl.: C08G 18/18, C08G 18/20, C08G 18/24, C08G 18/30, C08G 18/32, C08G 18/48, C08G 18/66, C08G 18/76, C08G 101/00

(54) **STICKSTOFFFREIE UND STICKSTOFFARME VERNETZENDE ADDITIVE FÜR KALTBLOCKWEICHSCHAUM MIT VERBESSERTEN KOMPRESSIONS- UND ALTERUNGSEIGENSCHAFTEN**

(30) Priorität: 16.07.2020 EP 20186111
(71) Anmelder: Evonik Operations GmbH, 45128 Essen (DE)
(72) Erfinder: Modro, Harald, 45966 Gladbeck (DE); Feldmann, Kai-Oliver, 45133 Essen (DE); Vidakovic, Mladen, 47269 Duisburg (DE); Landers, Rüdiger, 45257 Essen (DE); Hermann, Daniela, 40477 Düsseldorf (DE)
(74) Vertreter: Evonik Patent Association

(57) **Zusammenfassung**

Verfahren zur Herstellung von PU-Kaltblockweichschaumstoffen durch Umsetzung mindestens einer Polyolkomponente und mindestens einer Isocyanatkomponente in Gegenwart von Wasser sowie mindestens eines Katalysators und mindestens eines Vernetzers, wobei keine stickstoffhaltigen Vernetzer mit einer erweiterten OH-Zahl über 1000 mg KOH/g in einer Gesamtmenge > 0,5 Gew.-Teilen, vorzugsweise > 0,1 Gew.-Teilen, bezogen auf 100 Gew.-Teile Polyol, eingesetzt werden.

## Beschreibung

Die vorliegende Erfindung liegt auf dem Gebiet der Polyurethane (PU), vorzugsweise der PU-Schaumstoffe. Sie betrifft insbesondere die Bereitstellung von PU-Kaltblockweichschaumstoffen, wie z.B. Matratzen und/oder Kissen mit verbesserten Dauergebrauchs- und Alterungseigenschaften.

PU-Kaltblockweichschaumstoffe, wie z.B. PU-Kaltblockweichschaum-haltige Matratzen sind aus dem Stand der Technik lange bekannt und finden weltweite Verbreitung. Es hat nicht an Versuchen gemangelt, solche Gegenstände und ihre Herstellung immer weiter zu verbessern. Der Optimierungsbedarf ist bis heute nicht erloschen.

Ein Problem im Zusammenhang mit PU-Kaltblockweichschaumstoffen sind deren Dauergebrauchseigenschaften. So kann es bei längerer Nutzung von Matratzen zu einer lokalen Erweichung des Matratzenschaums und der Bildung von Kuhlen und Senken kommen, vor allem im Bereich der stärksten Belastung. Ursächlich hierfür sind Veränderungsprozesse in dem Matratzenschaum unter dem Einfluss des Gewichts des Nutzers. Hier ist besonders die stundenlange Kompression des Schaumstoffs durch die schlafende Person zu erwähnen. Diese Dauergebrauchseigenschaften sind ein wesentlicher Grund, warum Schaumstoffmatratzen oft nach mehreren Jahren Nutzung gegen neue ausgetauscht werden müssen. Wie unmittelbar ersichtlich ist, kann eine solche Krafteinwirkung im Zusammenhang mit der Kompression von PU-Kaltblockweichschaumstoffen zu einer Materialermüdung führen. Es ist ein sehr relevantes Problem, PU-Kaltblockweichschaumstoffe bereitzustellen, die auch nach längerer Kompression befähigt sind, ihre ursprüngliche Dimension wiederzuerlangen.

Konkrete Aufgabe der vorliegenden Erfindung war vor diesem Hintergrund die Bereitstellung von PU-Kaltblockweichschaumstoffen, wie insbesondere PU-Kaltblockweichschaum-haltigen Matratzen und/oder Kissen, mit verbesserten Dauergebrauchseigenschaften.

Es wurde im Rahmen dieser Erfindung überraschend gefunden, dass, wenn bei der Herstellung eines Polyurethankaltweichschaums als Blockschaum der eingesetzte Vernetzer allenfalls einen geringen Stickstoffgehalt aufweist und in der Formulierung zur Herstellung des Polyurethankaltblockweichschaums auch sonst im Wesentlichen kein stickstoffhaltiger Vernetzer zugegeben wird, die so hergestellten Polyurethan-Kaltblockweichschaumstoffe verbesserte Dauergebrauchseigenschaften sowie Alterungseigenschaften aufweisen, verglichen mit Polyurethan-Kaltblockweichschaumstoffen, die unter Einsatz üblicher stickstoffhaltiger Vernetzer erhalten werden.

Polyurethanschäume finden weitläufige Anwendung für die Herstellung von Matratzen und Polstermöbeln. Dabei werden verschiedene Typen Weichschaumstoffe eingesetzt. Neben Standard-Etherschaumstoffen sind einer davon Kaltweichschaumstoffe (auch hochelastische Schaumstoffe genannt). Diese sind hinsichtlich ihrer mechanischen Eigenschaften gekennzeichnet durch eine Rückprallelastizität von bevorzugt >= 50% (gemäß der Definition des Fachverbandes Schaumkunststoffe und Polyurethane e.V., D - 70435 Stuttgart = "FSK"). Die Rückprallelastizität wird dabei gemäß DIN EN ISO 8307:2008-03 gemessen. Ein weiteres Kriterium stellt der Komfortfaktor dar. Dieser sollte über 2,5 liegen (gemäß Definition FSK) (gemessen nach DIN EN ISO 2439 :2009-05). Hergestellt werden Kaltweichschaumstoffe entweder als Blockschaumstoffe oder als Formschaumstoffe. Hierbei steigt der Schaumstoff bei Blockschaumstoffen frei auf, wogegen er bei Formschaumstoffen in einer Form hinsichtlich seiner Expansion begrenzt ist.

Bei der Blockschaumtechnologie kann der Schaum also in mindestens eine Richtung (z.B. nach oben) frei aufsteigen. Der Druck in den Gasblasen des aufsteigenden Schaums ist dabei gewöhnlich dem atmosphärischen Druck in etwa äquivalent. Im Gegensatz dazu wird die Ausdehnung bei Formschäumen durch eine Form begrenzt. Es wird bei Formschäumen immer ein Überschuss an Reaktionsmischung verwendet, damit die Form auch vollständig ausgefüllt wird. Dies bezeichnet man als Überpackung. Dadurch kommt es bei der Expansion des Schaumstoffs zu einem Druckanstieg in den Zellen und einer partiellen Kompression des Zellgases. Die Form des sich bildenden Schaumkörpers wird bei Formschäumen durch die Geometrie der Form vorgegeben. An der Grenzfläche zu der Form bildet sich eine Haut aus, die in ihren Eigenschaften (Dichte, Luftdurchlässigkeit, Zellgröße, Haptik) deutlich von dem Inneren des Schaumteils abweicht.

Bestandteil dieser Erfindung sind PU-Kaltschäume hergestellt mittels der Blockschaumtechnologie, d.h. PU-Kaltblockweichschaum.

Hinsichtlich der chemischen Formulierung zur Herstellung von PU-Kaltweichschaumstoffen sind Ether-Polyole bevorzugt, die deutlich höhere Molmassen als Standardetherweichschaumstoffe aufweisen. Während Polyole für Standardetherweichschaumstoffe bei einer Funktionalität von 3 durch eine mittlere Molmasse (Zahlenmittel) von 3000 - 3500 g/mol charakterisiert sind, weisen Polyole für Kaltweichschaumstoffe bevorzugt Molmassen von > 4500 g/mol bei einer Funktionalität von ebenfalls 3 auf. Bezogen auf eine funktionelle Gruppe (OH-Gruppe) sind Kaltweichschaumpolyole also durch eine Polyolmasse von bevorzugt > 1500 g/mol gekennzeichnet. Diese Kaltweichschaum-Polyole sind in der Schaumformulierung gewöhnlich in der Mehrheit (> 50%). Im Normalfall werden bei Kaltweichschaumpolyolen primäre OH-Gruppen bevorzugt, bei Standard-Ether-Polyolen sekundäre OH-Gruppen. Wichtig für die Eigenschaften des Schaumstoffs (höhere Elastizität) ist die höhere Molmasse, die eine erhöhte Beweglichkeit und damit Elastizität des Polyurethan-Netzwerks bedingt. Allerdings führt dies auch zu einer geringeren Härte der gebildeten Kaltweichschaumstoffe. Deshalb werden Kaltweichschaum-Polyole oft auch mit festen Polymerpartikeln versetzt. Diese erhöhen die Härte der gebildeten Schaumstoffe. Solche sogenannten Polymerpolyole werden in Kaltweichschaumformulierungen oftmals eingesetzt. Die Polymerpolyole beinhalten Partikel aus zum Beispiel Styrol-Acrylnitril-Polymerisaten oder anderen Polymerpartikeln. Dabei werden bei der Herstellung der Polymerpolyole kovalente Bindungen zur umgebenden flüssigen Polyolphase aufgebaut (z.B. durch Pfropfung).

Bei der Herstellung des Polyurethankaltweichschaumstoffs werden üblicherweise weitere Komponenten eingesetzt. Neben dem Isocyanat wird gewöhnlich Wasser als chemisches Treibmittel eingesetzt. Eventuell können auch physikalische Treibmittel hinzutreten. Sowohl TDI als auch MDI werden gewöhnlich als Isocyanate verwendet. Aminkatalysatoren und Zinnverbindungen werden gewöhnlich als Katalysatoren eingesetzt. Dabei sind die Aminkatalysatoren üblicherweise dadurch gekennzeichnet, dass sie tertiäre Aminstrukturen aufweisen. Dies ist angezeigt, da ansonsten das katalytisch aktive Amin schnell mit Isocyanat reagieren würde und dadurch deaktiviert würde. Tertiäre Aminkatalysatoren können allerdings zusätzliche Gruppen enthalten, die dazu führen, dass eine langsame Reaktion des Moleküls mit Isocyanat erreicht wird und der Aminkatalysator nach erfolgter Reaktion in den Polyurethanschaum eingebaut wird. Dies wird in der Praxis eingesetzt, um eine Emission der oft geruchs- und VOC-intensiven Aminkatalysatoren aus dem Schaumstoff zu unterbinden. Ein typisches Beispiel wäre hier zum Beispiel Dimethylethanolamin. Diese Aminkatalysatoren sind dadurch gekennzeichnet, dass sie ein oder maximal zwei gegenüber Isocyanat reaktive Gruppen aufweisen, aber nicht mehr als 2. Sie tragen daher nicht zur Vernetzung des Polyurethanschaumstoffs bei, sondern werden lediglich aus Gründen der VOC- und Geruchs-Optimierung im Polyurethannetzwerk verankert. Die Einsatzmenge der verwendeten Aminkatalysatoren beträgt dabei vorzugsweise 0,05 - 0,5 Teile, d.h. vorzugsweise etwa 0,03 bis 0,35 Gew%. Zusätzlich zu den Aminkatalysatoren werden meistens auch Zinn-Katalysatoren (wie Zinnoktoat) eingesetzt, um die Bildung des Kaltblockweichschaumstoffs zusätzlich zu katalysieren. Neben den Katalysatoren werden üblicherweise auch noch Kaltblockweichschaumstabilisatoren verwendet. Hierbei handelt es sich um Silikonverbindungen, wie sie in der Literatur für Kaltweichschäume näher beschrieben sind. Des Weiteren müssen bei der Herstellung von Kaltweichschäumen noch Vernetzer verwendet werden. Vernetzer zeichnen sich aus durch eine Funktionalität von gegenüber dem Isocyanat reaktiven Gruppen von ≥3. Diese Vernetzer sind nötig, um eine ausreichende Stabilität der Kaltblockweichschaumformulierung beim Aufsteigen und bei der späteren Aushärtung zu gewährleisten. Ohne Einsatz von geeigneten Vernetzern wird im Regelfall ein Kollaps des aufsteigenden Kaltblockweichschaumstoffs beobachtet. Des Weiteren sorgen die Vernetzer für eine Erhöhung der Härte des gebildeten Polyurethanschaums und verbessern die Formstabilität der gebildeten Schaumstoffblöcke während der Aushärtung. Chemisch werden als Vernetzer im Stand der Technik üblicherweise stickstoffhaltige Alkanolamine mit mindestens drei dem Isocyanat gegenüber reaktiven Gruppen eingesetzt. Beispiele des Stands der Technik sind hier Triethanolamin (TEOA), Diethanolamin (DEOA), Diisopropanolamin (DIPA) oder Dipropanolamin (DPA). Diethanolamin, Diisopropanolamin und die Dipropanolamin verfügen neben den beiden OH-Gruppen noch über eine reaktionsfähige NH-Gruppierung, die die dritte reaktive Gruppe darstellt. Die Molmassen dieser stickstoffbasierten, niedermolekularen Vernetzer des Standes der Technik liegen unter 500 g/mol [M(Triethanolamin) = 149,2 g/mol, M(Diethanolamin) = 105,1 g/mol, M(Diisopropanolamin) = 133,2 g/mol, M(Dipropanolamin) = 133,2 g/mol]. Die erweiterten OH-Zahlen betragen dabei Triethanolamin (TEOA) 1128 mg KOH /g, Diethanolamin (DEOA) 1601 mg KOH/g, Diisopropanolamin (DIPA) 1263 mg KOH/g oder Dipropanolamin (DPA) 1263 mg KOH /g. Die erweiterten OH-Zahlen liegen dabei über 1000 mg KOH/g.

Im Sinne dieser Erfindung meint die erweiterte OH-Zahl die Summe aus der konventionellen OH-Zahl, bestimmbar wie üblich gemäß der DIN-Norm DIN 53240-2:2007-11, und der Aminzahl, bezogen auf die vorhandenen primären und sekundären Aminfunktionen.
Die primären und sekundären Aminfunktionen sind für Vernetzer von Bedeutung, da sie mit dem Isocyanat direkt reaktionsfähig sind. Bestimmbar ist die Aminzahl bezogen auf die primären und sekundären Amingruppen durch die Titration der Gesamtaminzahl gemäß DIN 53176:2002-11. Diese hat als Einheit mg KOH/ g Probe. Um nun die Aminzahl bezogen nur auf die primären und sekundären Amingruppen zu erhalten, muss der Anteil der primären, sekundären und tertiären Amine gemäß DIN EN ISO 9702:1998-10 bestimmt werden und dann der Anteil der primären und sekundären Amingruppen bezogen auf die Aminzahl ausgerechnet werden. Dieser Anteil der primären und sekundären Amingruppen an der Aminzahl wird dann in die erweiterte OH-Zahl aufgenommen. Liegen keine oder nur tertiäre Aminfunktionen vor, entspricht die erweiterte OH-Zahl demgemäß der konventionellen OH-Zahl.
Bei wasserhaltigen Mischungen wird dabei in der PU-Industrie und für die Zwecke der vorliegenden Erfindung Wasser nicht berücksichtigt, da es als chemisches Treibmittel (Reaktion mit dem Isocyanat) separat betrachtet werden muss. Die konventionellen OH-Zahlen (in mg KOH pro g Probe) berücksichtigen daher nicht den Wassergehalt, der separat ausgewiesen sein muss. Bei wasserhaltigen Proben kann die OH-Zahl auch durch analytische Messung bestimmt werden (z.B. DIN 53240-2-2007-11), allerdings muss sie bei wasserhaltigen Proben mit der Wasserbestimmung (nach Karl Fischer gemäß ISO 760:1978) kombiniert werden, um die OH-Zahl ohne Wasser zu berechnen. Die erweiterte OH-Zahl bei wasserhaltigen Mischungen ist die Summe aus der konventionellen OH-Zahl ohne Wasser und der Aminzahl bezogen auf primäre und sekundäre Amine.

Aber auch nach dem Abblasen des Schaumstoffs kann es bei unzureichender oder zu später Vernetzung noch zu Deformationsprozessen der gebildeten Kaltweichschaumstoffblöcke kommen. Hierbei verbreitern sich die Blöcke im unteren Bereich durch eine Deformation der Zellstruktur. Dieses Phänomen ist als "ColdFlow" bei Kaltweichschaumstoffblöcken bekannt. Es trat erst auf, als aufgrund toxikologischer Bedenken organo-Zinnverbindungen (besonders Dibutylzinndilaurat) durch Zinnsalze (z.B. Zinnoktoat) ersetzt werden mussten. Hintergrund ist die Deaktivierung von Zinnsalzen während der Reaktion durch Hydrolyse und damit die fehlende Unterstützung des Katalysators für die finale Aushärtung des Schaumstoffs. Als Gegenmaßnahme werden daher teilweise zusätzlich in Kaltblockweichschaumformulierungen sogenannte Anti-Cold-Flow-Additive eingesetzt. Auch diese haben eine vernetzende Wirkung. Im Gegensatz zu den schon erwähnten starken Vernetzern soll dabei allerdings der Einfluß auf die Verschäumung minimiert werden. Deshalb ist die erweiterte OH-Zahl der Anti-Cold-Flow-Additive üblicherweise < 1000 mg KOH/g. Typische Anti-Cold-Flow-Additive enthalten auch stickstoffhaltige Komponenten.

Gewöhnlich werden Anti-Cold-Flow-Additive daher in Kaltblockweichschaumformulierungen nicht allein, sondern in Kombination mit noch mindestens einem starken niedermolekularen (Molmasse < 500 g/mol) Vernetzer eingesetzt. Diese starken Vernetzer waren auch schon vor dem Wechsel von Organozinn auf Zinnsalze nötig.

Optional können vorteilhafterweise auch weitere übliche Additive, Aktivstoffe und Hilfsstoffe zusätzlich eingesetzt werden.
Eine typische Kaltblockweichschaumformulierung gemäß dem Stand der Technik sieht daher in etwa wie folgt aus:

### Typische Formulierung zur Herstellung eines Kaltblockschaumstoffs nach dem Stand der Technik:

100 -X Teile Kaltschaumpolyol
X Teile Kaltschaumpolyol mit Polymerpartikeln
1 - 4 Teile Wasser
Optional Physikalische Treibmittel (z.B. Methylenchlorid, Flüssiges CO₂, usw.)
0,1 - 0,3 Teile Aminkatalysator (z.B. DMEA, TEDA, BDME, reaktive Aminkatalysatoren)
0,05 - 0,2 Teile Zinnkatalysator (z.B. Zinnoktoat= Zinnsalz)
0,5 - 2 Teile stickstoffbasierter Vernetzer (Alkanolamin) (typischerweise DEOA)
0 - 1,5 Teile Anti-Cold-Flow Additiv z.B. ORTEGOL^{®} 204
0,1 - 0,8 Teile Stabilisator
25 - 60 Teile Isocyanat (TDI 80, TDI 65, MDI).

Gemäß dem Stand der Technik werden als Vernetzer für Kaltblockschaumformulierungen stickstoffhaltige Vernetzer (Alkanolamine) eingesetzt. Die so hergestellten Kaltblockschäume sind allerdings problematisch hinsichtlich ihrer Alterungseigenschaften.

Besonders bei der Messung des Compression Sets / Druckverformungsrests werden für Kaltblockweichschäume oftmals unbefriedigende Werte gemessen. Der Compression Set Test (DIN EN ISO 1856 :2008-01) dient dabei in der Industrie als wichtiger Indikator für die Dauergebrauchseigenschaften von Polyurethanschäumen generell und hier besonders für die Anwendung dieser Polyurethanschaumstoffe in Matratzen und Polstermöbeln. Matratzen sind im Sinne dieser Erfindung ganz besonders bevorzugt. Das gilt vorteilhafterweise auch für alle folgenden bevorzugten Ausführungsformen. Schlechte (d.h. hohe) Werte bei Compression Set-Messungen werden daher von Möbel- und Matratzenproduzenten sehr kritisch hinsichtlich der zu erwartenden Alterungseigenschaften der Matratzen, Kissen oder Polstermöbel gesehen.

Bei der Messung des Compression Sets werden Schaumstoffprobenkörper stark komprimiert und in komprimiertem Zustand eine längere Zeit (z.B. 24 h) bei erhöhter Temperatur gelagert. Anschließend wird das komprimierende Gestell entfernt und beobachtet, wie weit der Schaumstoffprobenkörper sich wieder ausdehnt. Die Differenz zu der ursprünglichen Probenhöhe in % ergibt den Druckverformungsrest / Compression Set. Dabei kann der Compression Set entweder trocken (aber bei erhöhter Temperatur) oder aber auch in einer gesättigten Wasserdampf-Atmosphäre gemessen werden.
Überraschenderweise wurde im Rahmen der hier vorliegenden Erfindung gefunden, dass die Dauergebrauchseigenschaften und die Alterungseigenschaften, besonders der Compression Set, sich deutlich verbessern, wenn stickstofffreie oder allenfalls stickstoffarme Vernetzer anstelle der üblichen stickstoffhaltigen Alkanolamine eingesetzt werden.

Gegenstand der Erfindung ist daher ein Verfahren zur Herstellung von PU-Kaltblockweichschaumstoffen durch Umsetzung mindestens einer Polyolkomponente und mindestens einer Isocyanatkomponente in Gegenwart von Wasser sowie mindestens eines Katalysators, umfassend zumindest einen Zinnkatalysator, und mindestens eines Vernetzers, dadurch gekennzeichnet, dass keine stickstoffhaltigen Vernetzer mit einer erweiterten OH-Zahl über 1000 mg KOH/g in einer Gesamtmenge > 0,5 Gew.-Teilen, vorzugsweise > 0,1 Gew.-Teilen, bezogen auf 100 Gew.-Teile Polyol, eingesetzt werden,
wobei stickstoffhaltige Vernetzer im Sinne dieser Erfindung einen Stickstoffgehalt von > 0,5 Gew.-% aufweisen, gemessen durch Kjeldahl-Analyse, Gew.-% bezogen auf den jeweiligen Vernetzer,
wobei zumindest zwei stickstofffreie oder stickstoffarme Vernetzer mit einem Stickstoffgehalt von ≤ 0,5 Gew.-%, gemessen durch Kjeldahl-Analyse, Gew.-% bezogen auf den jeweiligen Vernetzer, in einer Gesamtmenge ≥ 0,1 Gew.-Teilen, vorzugsweise ≥ 0,1 bis 5 Gew.-Teilen, bevorzugt 0,2 bis 3 Gew.-Teilen, insbesondere 0,5 bis 2 Gew.-Teilen , bezogen auf 100 Gew.-Teile Polyol, eingesetzt werden,
und wobei maximal 4 Teile Wasser pro 100 Teile Polyol eingesetzt werden,
und wobei, bezogen auf die gesamte Polyolkomponente, > 50 Gew.-% Kaltweichschaum-Ether-Polyole mit Molmassen von > 1500 g/mol pro OH-Gruppe eingesetzt werden,
und wobei der einzelne Vernetzer eine Funktionalität von gegenüber dem Isocyanat reaktiven Gruppen von ≥3 aufweist,
und wobei als Isocyanatkomponenten geeignete Isocyanate alle Isocyanate sind, die mindestens zwei Isocyanat-Gruppen enthalten,
und wobei der Isocyanatindex > 95 und ≤ 115 ist,
und wobei weniger als 2 Teile, vorzugsweise kein Polyesterether mit einer OH-Zahl von 55 bis 57 mg KOH/g pro 100 Teile Polyol eingesetzt wird.

Erfindungsgemäß werden zumindest zwei stickstofffreie oder stickstoffarme Vernetzer mit einem Stickstoffgehalt von ≤ 0,5 Gew.-%, gemessen durch Kjeldahl-Analyse, Gew.-% bezogen auf den jeweiligen Vernetzer, in einer Gesamtmenge ≥ 0,1 Gew.-Teilen, vorzugsweise ≥ 0,1 bis 5 Gew.-Teilen, bevorzugt 0,2 bis 3 Gew.-Teilen, insbesondere 0,5 bis 2 Gew.-Teilen , bezogen auf 100 Gew.-Teile Polyol, eingesetzt. "Stickstofffreie oder stickstoffarme" Vernetzer sind im Sinne dieser Erfindung Vernetzer mit einem Stickstoffgehalt von ≤ 0,5 Gew.-%, gemessen durch Kjeldahl-Analyse, Gew.-% bezogen auf den jeweiligen Vernetzer. Insbesondere sind diese Vernetzer frei von Stickstoff. "Stickstoffhaltige Vernetzer" im Sinne dieser Erfindung weisen demnach einen Stickstoffgehalt von > 0,5 Gew.-% auf, gemessen durch Kjeldahl-Analyse, Gew.-% bezogen auf den jeweiligen Vernetzer.

Insbesondere werden gar keine stickstoffhaltigen Vernetzer mit einer erweiterten OH-Zahl über 1000 mg KOH/g eingesetzt.

Dabei wird vorteilhafterweise gewährleistet, dass der erfindungsgemäße stickstofffreie oder stickstoffarme Vernetzer hinsichtlich der Verschäumungseigenschaften aber auch der Qualität der gebildeten Kaltschaumstoffe möglichst äquivalent gegenüber den konventionellen stickstoffhaltigen Vernetzern ist.

Erfindungsgemäß bevorzugt einsetzbare stickstofffreie oder stickstoffarme Vernetzer sind:
(a) Zuckeralkohole, bevorzugt umfassend Sorbitol, Mannitol, Maltitol, Isomalt, Lactitol, Xylitol, Threit, Erythrit und/oder Arabit, insbesondere Sorbitol und/oder Maltitol,
(b) Glycerin(derivat)e, bevorzugt umfassend Glycerin, Diglycerin und/oder Triglycerin, insbesondere Diglycerin und/oder Triglycerin,
   und/oder
(c) weiterer niedermolekulare stickstofffreier oder stickstoffarmer Vernetzer wie Pentaerythrit und/oder 1,1,1-Trimethylolpropan,
vorzugsweise aber zumindest ein stickstofffreier oder stickstoffarmer Vernetzer aus der Gruppe der Zuckeralkohole und zumindest ein stickstofffreier oder stickstoffarmer Vernetzer aus der Gruppe der Glycerin(derivat)e,
ganz besonders bevorzugt werden Sorbitol und/oder Maltitol sowie zusätzlich Diglycerin und/oder Triglycerin eingesetzt.

Eine Mischung von 2 oder mehr niedermolekularen stickstofffreien oder stickstoffarmen Vernetzern erwies sich in dieser Beziehung und was die Verbesserung der Dauergebrauchseigenschaften angeht als besonders vorteilhaft. Gemäß der Erfindung werden daher zumindest zwei Vernetzer eingesetzt, vorzugsweise aus der Gruppe der Zuckeralkohole (vorzugsweise umfassend Sorbitol, Mannitol, Maltitol, Isomalt, Lactitol, Xylitol, Threit, Erythrit und/oder Arabit, insbesondere Sorbitol und/oder Maltitol), der Glycerin(derivat)e (vorzugsweise umfassend Glycerin, Diglycerin, und/oder Triglycerin, insbesondere Diglycerin und/oder Triglycerin) und/oder weiterer niedermolekulare stickstoffarme Vernetzer wie Pentaerythrit 1,1,1-Trimethylolpropan, insbesondere aber aus der der Gruppe der Zuckeralkohole (vorzugsweise umfassend Sorbitol, Mannitol, Maltitol, Isomalt, Lactitol, Xylitol, Threit, Erythrit und/oder Arabit) und/oder der Glycerin(derivat)e (vorzugsweise umfassend Glycerin, Diglycerin, und/oder Triglycerin). Insbesondere werden Sorbitol und/oder Maltitol sowie zusätzlich Diglycerin und/oder Triglycerin eingesetzt.

Wenn der Vernetzer als lösungsmittelhaltiges, vorzugsweise wasserhaltiges Additiv eingesetzt wird, vorzugsweise umfassend > 0 bis 50 Gew.-% Lösungsmittel, insbesondere Wasser, sowie 50 bis <100 Gew.-% Vernetzer, dabei als Vernetzer vorzugsweise umfassend Zuckeralkohol(e), Glycerin(derivat)e, und/oder weitere niedermolekulare stickstofffreie oder stickstoffarme Vernetzer, insbesondere aber zumindest einen stickstofffreien oder stickstoffarmen Vernetzer aus der Gruppe der Zuckeralkohole und zumindest einen stickstofffreien oder stickstoffarmen Vernetzer aus der Gruppe der Glycerin(derivat)e, insbesondere als Vernetzer umfassend Sorbitol und/oder Maltitol, sowie zusätzlich Diglycerin und/oder Triglycerin, liegt eine weitere bevorzugte Ausführungsform der Erfindung vor. Eine ganz besonders bevorzugte Ausführungsform im Sinne dieser Erfindung betrifft dementsprechend ein wasserhaltiges Additiv, umfassend > 0 bis 50 Gew.-% Wasser sowie 50 bis <100 Gew.-% Sorbitol und/oder Maltitol sowie zusätzlich Diglycerin und/oder Triglycerin.

Wenn in dem erfindungsgemäßen Verfahren zumindest 50 Gew.-% der insgesamt eingesetzten Polyole der Polyolkomponente eine Funktionalität von 2,5 bis 4, zahlengemittelte Molekulargewichte im Bereich von 4500 bis 8000 g/mol aufweisen und vorzugsweise >50%, insbesondere mindestens 70% bis zu 95%, primäre Hydroxylgruppen aufweisen, so liegt eine bevorzugte Ausführungsform der Erfindung vor.

Wenn in dem erfindungsgemäßen Verfahren Polymerpolyole eingesetzt werden, liegt eine weitere bevorzugte Ausführungsform der Erfindung vor.

Ein weiterer Gegenstand der Erfindung ist ein PU-Kaltblockweichschaumstoff, vorzugsweise Matratze oder Kissen, erhältlich nach dem erfindungsgemäßen Verfahren.

In einer bevorzugten Ausführungsform der Erfindung zeichnet sich der PU-Kaltblockweichschaumstoff dadurch aus, dass der PU-Schaumstoff-Körper, bezogen auf sein Ausgangsvolumen um mindestens 20%, vorzugsweise 30%, insbesondere 40% komprimiert wurde und von einem Hilfsmittel, insbesondere Verpackungsmittel, für mindestens 20 Stunden in komprimierter Form gehalten wird.

Ein weiterer Gegenstand der Erfindung ist die Verwendung von erfindungsgemäßem PU-Kaltblockweichschaumstoff in Matratzen und/oder Kissen, insbesondere Matratzen, zur Bereitstellung von Matratzen und/oder Kissen mit verbesserten Alterungs- , Dauergebrauchs- und Kompressionseigenschaften sowie Dimensionswiedererlangung nach Kompression, verglichen mit Polyurethan-Kaltblockweichschaumstoffen, die unter Einsatz üblicher stickstoffhaltiger Vernetzer erhalten werden. Dies ist ersichtlich in niedrigeren Werten für den Compression Set (Druckverformungsrest) (trocken) oder dem Wet Compression Set (feucht), jeweils gemessen gemäß DIN EN ISO 1856 :2008-01 jeweils gegenüber den Referenzschaumstoffen hergestellt unter Einsatz üblicher stickstoffhaltiger Vernetzer. Niedrigere Werte in dem Druckverformungstest bedeuten dabei eine erhöhte Formstabilität des Probenkörpers bei Deformationen / Kompression. Höhere Werte dagegen werden als problematisch hinsichtlich der Dauergebrauchseigenschaften bei Matratzen (Bildung von Liegekuhlen) angesehen.

Insbesondere resultiert auch ein verbessertes Emissionsverhalten. Hierbei sind niedrigere Werte bei der Gesamtmenge an flüchtigen organischen Substanzen (Total-VOC oder TVOC) gemessen nach DIN EN ISO 16000-9:2008-04, 24 Stunden nach Prüfkammerbeladung erstrebenswert, jeweils gemessen gegenüber Referenzschäumen hergestellt unter Einsatz üblicher stickstoffhaltiger Vernetzer. Niedrigere TVOC-Werte bedeuten direkt, dass weniger flüchtige organische Substanzen in die Luft abgegeben werden und auch von Konsumenten inhaliert werden können.

Ein weiterer Gegenstand der Erfindung ist ein vernetzendes lösungsmittelhaltiges, vorzugsweise wasserhaltiges Additiv für den Einsatz in PU-Kaltblockweichschaumformulierungen, umfassend > 0 bis 50 Gew.-% Lösungsmittel, vorzugsweise Wasser, sowie 50 bis <100 Gew.-% Vernetzer, dabei als Vernetzer vorzugsweise umfassend Zuckeralkohol(e), und/oder Glycerin(derivat)e, insbesondere aber zumindest einen Vernetzer aus der Gruppe der Zuckeralkohole und zumindest einen Vernetzer aus der Gruppe der Glycerin(derivat)e, mit der Maßgabe, dass keine stickstoffhaltigen Vernetzer mit einer erweiterten OH-Zahl über 1000 mg KOH /g in einer Gesamtmenge > 5 Gew.-%, vorzugsweise > 1 Gew.-%, insbesondere > 0,1 Gew.-Teilen, bezogen auf 100 Gew.-% des lösungsmittelhaltigen Additivs enthalten sind.

Ein weiterer Gegenstand der Erfindung ist die Verwendung des erfindungsgemäßen Additivs in Kaltblockweichschaumformulierungen zur Verbesserung der Compression-Set-Werte der gebildeten Polyurethan-Kaltblockweichschaumstoffe, verglichen mit Polyurethan-Kaltblockweichschaumstoffen, die unter Einsatz üblicher stickstoffhaltiger Vernetzer erhalten werden. Verbesserung der Compression Set Werte (egal ob im trockenen oder feuchten Zustand) bedeutet dabei geringere Werte für den Druckverformungsrest gemessen gegenüber Referenzschäumen hergestellt unter Einsatz üblicher stickstoffhaltiger Vernetzer. Dabei wäre der optimale theoretisch mögliche Wert für den Druckverformungsrest 0%. Die tatsächlich beobachteten Werte für den Druckverformungsrest sind aber größer als 0% und abhängig von dem jeweiligen Polyurethan-Schaumstofftyp. Jedoch ist immer das Ziel die Werte des Druckverformungsrestes zu minimieren.

Ein weiterer Vorteil der Erfindung ist, dass die erfindungsgemäß resultierenden PU-Kaltblockweichschaumstoffe emissionsarm sind.

"Emissionsarm" umfasst im Sinne der vorliegenden Erfindung insbesondere, dass der erfindungsgemäß resultierende PU-Kaltblockweichschaumstoff eine VOC-Emission von ≥ 0 µg/m³ und ≤ 500 µg/m³, vorzugsweise ≤ 200 µg/m³, besonders bevorzugt ≤ 100 µg/m³, aufweist, entsprechend ermittelt nach dem Prüfkammerverfahren in Anlehnung an die DIN-Norm DIN EN ISO 16000-9:2008-04, 24 Stunden nach Prüfkammerbeladung. Diese Methode ist in der EP 3205680A1, dort in Absatz [0070], genau beschrieben, worauf hiermit Bezug genommen wird.

Ein weiterer Vorteil der Erfindung ist, dass die betreffenden PU-Kaltblockweichschaumstoffe auch Emissions-Spezifikationen wie CertiPur erfüllen können. Emissionsarm nach CertiPur heißt hierbei, dass die Gesamt- Emissionen flüchtiger organischer Substanzen (TVOC) kleiner 500 µg/m³ ist. Nähere technische Angaben zu den Anforderungen für den CertiPUR Standard (Version 1. July 2017) finden sich unter: https://www.europur.org/images/CertiPUR-Technical_Paper_-_Full_Version_-_2017.pdf. Dieses letztgenannte Dokument (Version 1. July 2017) kann auch direkt bei der EUROPUR, Avenue de Cortenbergh 71, B-1000 Brussels, Belgium angefordert werden.

PU-Schaumstoffe (Polyurethanschaumstoffe) und deren Herstellung sind dem Fachmann wohlbekannt und bedürfen an sich keiner weiteren Erläuterung. PU-Schaumstoff-Körper im Sinne der Erfindung sind Körper unterschiedlicher Gestalt. Bevorzugte Gestalten im Sinne der Erfindung sind z.B. Geometrien wie Kugeln, Quader, Zylinder usw. PU-Schaumstoff-Körper im Sinne der Erfindung sind demnach Körper aus Polyurethankaltschaumstoff. Besonders bevorzugte PU-Kaltblockweichschaumstoff-Körper im Sinne dieser Erfindung sind Matratzen und/oder Kissen sowie Schaumstoffblöcke im Allgemeinen.

Matratzen an sich und deren Herstellung sind bekannt. Gewöhnlich bestehen sie aus einem Matratzenkern, z.B. umfassend Schaumstoff, Latex, Naturprodukte und/oder Federkern, sowie einem die Matratze umgebenden Bezug. Für Kissen gilt entsprechendes. Matratzen und/oder Kissen im Sinne dieser Anmeldung bedeutet, dass mindestens ein Abschnitt aus PU-Kaltblockweichschaumstoff in der Matratze und/oder dem Kissen enthalten ist. Vorzugsweise bedeutet es, dass zumindest ein Teil der Matratze und/oder des Kissens aus PU-Kaltblockweichschaumstoff besteht. Bezogen auf das Gesamtgewicht der Matratze und/oder des Kissens kann dieser Teil zumindest 1 Gew.-% oder 5 Gew.-% oder 25 Gew.-%, vorzugsweise mindestens 50 Gew.-%, insbesondere mindestens 75 Gew.-% ausmachen. Es ist auch möglich, dass die Matratze und/oder das Kissen, abgesehen vom Bezug, ganz und gar aus PU-Kaltblockweichschaumstoff besteht.

Die Herstellung von Polyurethanweichschaum generell ist an sich bekannt. Er entsteht durch die bestens erprobte Umsetzung von mindestens einer Polyolkomponente und mindestens einer Isocyanatkomponente in Gegenwart von mindestens einem Treibmittel (z.B. Wasser). Für die vorliegende Erfindung ist dabei wesentlich, dass es sich um einen frei gestiegenen PU-Kaltblockweichschaumstoff handelt und diese Umsetzung im Wesentlichen ohne Verwendung stickstoffhaltiger Vernetzer erfolgt. Frei gestiegen meint dabei, dass es sich nicht um einen Formschaumprozess, sondern einen Blockschaumprozess handelt.

Der erfindungsgemäße Polyurethan-Schaumstoff ist ein Polyurethan-Kaltblockweichschaumstoff, oder es wird eine Kombination dieser PU-Blockweichschaumstoffe verwendet, z.B. zwei dieser PU-Kaltblockweichschaumstoffe. Der Begriff des PU-Kaltblockweichschaumstoffes ist dem Fachmann an sich bekannt, es handelt sich um einen feststehenden technischen Begriff, die in der Fachwelt entsprechend etabliert ist, sei aber hier dennoch kurz erläutert.

PU-Weichschaumstoffe sind elastisch und verformbar und meistens offenzellig. Dadurch kann die Luft bei Kompression leicht entweichen. Daneben gibt es auch noch PU-Hartschaumstoffe, die unelastisch und meist geschlossenzellig sind, für Isolationszwecke eingesetzt werden und nicht im Fokus der vorliegenden Erfindung sind. Verschiedenste PU-Weichschaumstoffe existieren. So sind dem Fachmann unter anderem Esterschaumstoffe (aus Polyesterpolyolen), PU-Heißweichschaumstoffe und PU-Kaltweichschaumstoffe bekannt. Der entscheidende Unterschied zwischen einem PU-Heißweichschaum und einem PU-Kaltweichschaum besteht in den unterschiedlichen mechanischen Eigenschaften. Die Differenzierung zwischen PU-Heißweichschaumstoffen und PU-Kaltweichschaumstoffen kann insbesondere durch die Rückprallelastizität, auch "ball rebound" (BR) oder "resilience" genannt, erfolgen. Ein Verfahren zur Bestimmung der Rückprallelastizität ist beispielsweise in der DIN EN ISO 8307:2008-03 beschrieben. Hierbei wird eine Stahlkugel mit festgelegter Masse aus einer bestimmten Höhe auf den Probenkörper fallen gelassen und dann die Höhe des Rückpralls in % der Abwurfhöhe gemessen. Die betreffenden Werte für einen PU-Kaltweichschaum liegen dabei vorzugsweise im Bereich von > 50 %. PU-Kaltweichschaumstoffe werden daher auch oft als HR-Schäume bezeichnet (engl. HR: High Resilience). Demgegenüber weisen PU-Heißweichschaumstoffe Rückprall-Werte von vorzugsweise 1 % bis maximal 50 % auf.

Die erfindungsgemäßen PU-Kaltblockweichschaumstoffe weisen daher im Rahmen einer bevorzugten Ausführungsform der Erfindung Rückprall-Werte von mindestens 50 % auf, bestimmbar nach DIN EN ISO 8307:2008-03. Ein weiteres mechanisches Kriterium stellt der SAG- oder Komfortfaktor dar. Hierbei wird eine Schaumprobe gemäß DIN EN ISO 2439 :2009-05 komprimiert und das Verhältnis der Druckspannung bei 65% und 25% Kompression gemessen. PU-Kaltweichschäume haben dabei einen SAG- oder Komfort-Faktor von vorzugsweise > 2,5. PU-Heißweichschäume haben einen Komfort-Faktor von < 2,5. Die erfindungsgemäßen PU-Kaltblockweichschaumstoffe weisen daher im Rahmen einer bevorzugten Ausführungsform der Erfindung einen SAG- oder Komfort-Faktor von vorzugsweise > 2,5 auf, bestimmbar wir zuvor angegeben.

Eine genaue Definition der Eigenschaften kann z.B. auch dem Datenblatt "PUR-Kaltschaum" des Fachverbandes Schaumkunststoffe und Polyurethane e.V., Kennzeichen KAL20160323, Stand 23.03.2016, entnommen werden. (https://www.fsk-vsv.de/wp-content/uploads/2017/03/Produktbeschreibung-PUR-Kaltschaum.pdf). Dieses Datenblatt kann auch direkt beim Fachverband Schaumkunststoffe und Polyurethane e.V. (FSK), Postanschrift: Stammheimerstr. 35, D-70435 Stuttgart angefordert werden.

Die beiden Namen PU-Heißweichschaumstoff und PU-Kaltweichschaumstoff erklären sich dabei aus der historischen Entwicklung der PU-Technologie und bedeuten nicht zwangsläufig, dass andere Temperaturen bei dem Verschäumungsprozeß auftreten.

Die unterschiedlichen mechanischen Eigenschaften von PU-Heißweichschaumstoffen und PU-Kaltweichschaumstoffen resultieren aus Unterschieden in der Formulierung zur Herstellung der Schaumstoffe. Bei einem PU-Kaltweichschaum werden gewöhnlich überwiegend hochreaktive Polyole mit primären OH-Gruppen und mittleren Molmassen > 4500 g/mol verwendet. Dagegen werden bei PU-Heißweichschaumstoffen gewöhnlich überwiegend reaktionsträgere Polyole mit sekundären OH-Gruppen und einer mittleren Molmasse < 4000 g/mol verwendet. Bei PU-Kaltweichschaumstoffen kommt es bereits in der Expansionsphase (CO₂-Bildung aus -NCO und H₂O) des Schaums zu der Reaktion der Isocyanatgruppen mit den primären Hydroxylgruppen. Diese schnelle Polyurethanreaktion führt über Viskositätsanstieg gewöhnlich zu einer relativ hohen Eigenstabilität des Schaums während des Treibvorgangs. Dadurch bedingt werden andere Schaumstabilisatoren mit unterschiedlichen Siloxanstrukturen im Vergleich zu PU-Heißweichschaumstoffen benötigt. Aufgrund der Eigenstabilität sind die Zellen am Ende des Schäumvorgangs eines Kaltweichschaumstoffs in der Regel nicht genügend geöffnet und die Zellstruktur muss noch mechanisch aufgedrückt werden ("crushen").

Die Produktion von Polyurethanweichschaumstoffen kann generell entweder in einer Form (z.B. aus Metall) oder frei gestiegen erfolgen. Bei Kaltweichschaumstoffen spricht man im ersten Fall von Kaltformweichschaumstoff im zweiten Fall von Kaltblockweichschaumstoff. Kaltblockweichschaumstoffe sind erfindungsgemäß.

Die Offenzelligkeit von PU-Kaltblockweichschaumstoffen wird indirekt bestimmt durch die Messung der benötigten Kraft zum Aufdrücken der Zellstruktur (FTC = Force to Crush). PU-Kaltblockweichschaumstoffe werden routinemässig in der Produktion durch Kompression geöffnet und ihre Luftdurchlässig erhöht ("crushen"). Die dafür benötigte Kraft ist umso höher, je härter und je geschlossener der Schaum ist. Um den Härteeinfluß zu eliminieren, betrachtet man die Differenz zwischen der zur erstmaligen Kompression benötigten Kraft und der in vollständig aufgedrückten Zustand benötigten Kraft. Die Differenz stellt ein Maß für die Geschlossenzelligkeit dar. Je höher der Wert ist, desto geschlossener der Schaumstoff. Als Probenkörper für die Messung wird ein 15 cm hoher Schaumstoffprobenkörper verwendet, der jeweils 50 % mittels einer mechanischen Prüfmaschine (Zwick Model Z010) komprimiert wird nach 10maliger Kompression zusätzlich noch manuell maximal komprimiert wird. Danach wird der Schaum ein 11. Mal komprimiert und die Kraft mit dem 1. Mal verglichen. Vorteilhaft für Anwendungen in Matratzen und Möbeln ist dabei eine möglichst kleine Differenz zwischen den beiden Werten.

PU-Kaltblockweichschaumstoffe besitzen je nach Anwendung vorzugsweise ein Raumgewicht zwischen 8 und 80 kg/m³. Hierbei wird insbesondere bei der Verwendung solcher PU-Kaltblockweichschaumstoffe als Matratzen, Matratzenbestandteile und/oder Kissen nach regionalen Bedürfnissen, Anforderungen und Vorlieben der Verbraucher unterschieden. Der bevorzugte PU-Kaltblockweichschaumstoff für Matratzenanwendungen hat dabei ein Raumgewicht von vorzugsweise 20 - 40 kg/m³, besonders bevorzugt 25 - 35 kg/m³.

Verschiedene PU-Kaltblockweichschaumstoffe werden neben dem Raumgewicht oft nach ihrer Stauchhärte, auch Tragfähigkeit genannt, für bestimmte Anwendungen eingestuft. So liegt die Stauchhärte CLD (Compression Load Deflection), 40 % nach DIN EN ISO 3386-1:2015-10 für PU-Kaltweichschaumstoffe vorzugsweise im Bereich von 1,0 - 8,0 kPa, bevorzugt 1,5 - 4 kPa, besonders bevorzugt 2,0 - 3,0 kPa.

Gemäß einer bevorzugten Ausführungsform der Erfindung weisen die erfindungsgemäß einzusetzenden PU-Kaltblockweichschaumstoffe folgende bevorzugte Eigenschaften hinsichtlich Rückprallelastizität und Raumgewicht auf, nämlich eine Rückprallelastizität von größer 50 %, gemessen nach DIN EN ISO 8307:2008-03, und/oder ein Raumgewicht von 8 bis 80 kg/m³. Besonders bevorzugt sind alle beide Kriterien bezüglich Rückprallelastizität und Raumgewicht, wie eben beziffert, erfüllt. Insbesondere weist der erfindungsgemäß eingesetzte PU-Kaltblockweichschaumstoff eine Stauchhärte CLD, 40 % nach DIN EN ISO 3386-1:2015-10 von 2,0 bis 3,0 kPa auf.

Der erfindungsgemäße PU-Kaltblockweichschaumstoff-Körper, insbesondere die erfindungsgemäße Matratze, weist im Rahmen einer bevorzugten Ausführungsform der Erfindung eine Höhe von mindestens 1 cm bis maximal 50 cm, sowie eine Breite von mindestens 20 cm bis maximal 300 cm auf, sowie eine Länge von mindestens 20 cm bis maximal 300 cm. Bevorzugte Maße sind z.B. Höhen im Bereich von 5 cm bis 40 cm, Breiten im Bereich von 70 cm bis 200 cm, Längen im Bereich von 150 cm bis 220 cm. Der erfindungsgemäße PU-Kaltblockschaumstoff-Körper, insbesondere das erfindungsgemäße Kissen, kann im Rahmen einer bevorzugten Ausführungsform der Erfindung auch eine Höhe von mindestens 1 cm bis maximal 40 cm, sowie eine Breite von mindestens 15 cm bis maximal 200 cm auf, sowie eine Länge von mindestens 15 cm bis maximal 200 cm aufweisen, wobei bevorzugte Maße z.B. Höhen im Bereich von 2 cm bis 30 cm, Breiten im Bereich von 15 cm bis 50 cm, Längen im Bereich von 15 cm bis 50 cm sind.

Gemäß einer weiteren bevorzugten Ausführungsform der Erfindung ist der PU-Kaltblockweichschaumstoff-Körper eine Matratze und ist vorzugsweise als Mehrzonen-Matratze ausgebildet. Die unterschiedlichen Zonen unterscheiden sich dabei insbesondere durch die jeweilige Härte. Solche Mehrzonen-Matratzen und deren Herstellung sind an sich bekannt. Sie werden breit kommerziell vertrieben. Insbesondere weist die Matratze bis zu sieben Zonen unterschiedlicher Härte auf, die sich über die Matratzenlängsrichtung erstrecken und in der entsprechenden Breite ausgeführt sind. Wenn die Matratze über ihre Fläche verteilt verschiedene Härtezonen aufweist, die insbesondere durch Einschnitte und/oder Hohlräume in der Matratze gebildet sind, so liegt eine weitere bevorzugte Ausführungsform der Erfindung vor.

Nach einer weiteren bevorzugten Ausführungsform der Erfindung kann es sich bei dem PU-Kaltblockweichschaumstoff-Körper auch um eine PU-Kaltschaummatratze, eine viskoelastische PU-Weichschaum-Matratze, eine PU-Heißweichschaummatratze, eine PU-Gelschaum-Matratze, eine Latexmatratze oder eine Boxspring-Matratze, jeweils enthaltend mindestens ein Teil aus einem erfindungsgemäßen PU-Kaltblockweichschaumstoff, handeln. Diese Matratzentypen sind an sich dem Fachmann bekannt und werden unter diesen Bezeichnungen auch weltweit vermarktet. Matratzen nur aus PU-Kaltblockweichschaumstoff werden am Markt gewöhnlich vereinfacht als Kaltschaummatratzen bezeichnet. Der erfindungsgemäße Begriff der Matratze umfasst im Sinne dieser Erfindung auch entsprechende Matratzenauflagen und -unterlagen.

Die Herstellung entsprechender PU-Kaltblockweichschaumstoffe bedarf an sich keiner weiteren Erläuterung mehr, dennoch werden im Folgenden einige bevorzugte Details zur Herstellung des erfindungsgemäß eingesetzten PU-Schaums genannt. Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 23 °C und einem Druck von 100 kPa durchgeführt.

Als Polyurethane werden hier alle Reaktionsprodukte ausgehend von Isocyanaten, insbesondere von Polyisocyanaten, und Polyolen verstanden. Wie der Fachmann weiß, können bei der entsprechenden Umsetzung von Polyisocyanaten und Polyolen auch weitere Reaktionskomponenten zugegeben werden, die zu weiteren anderen Reaktionsprodukten führen. So führt die Reaktion von beigefügtem Wasser zu Polyharnstoffen. So werden gewöhnlich unter anderem auch Polyisocyanurate, Polyharnstoffe sowie Allophanat-, Biuret-, Uretdion-, Uretimin- oder Carbodiimid-enthaltende Isocyanat- oder Polyisocyanat-Reaktionsprodukte erhalten, (beispielsweise in dem Isocyanat-Gruppen mit Urethan- bzw. Harnstoff-Gruppen unter Ausbildung von Allophanat- bzw. Biuret-Strukturen reagieren), so dass vorzugsweise auch die eben genannten Polyisocyanurate, Polyharnstoffe usw. vom Begriff des Polyurethans mitumfasst sind. Es versteht sich von selbst, dass der Fachmann zur Herstellung der unterschiedlichen Polyurethanweichschaumstoffe, beispielsweise von PU-Kaltblockweichschaumstoffen, die hierfür jeweils notwendigen Substanzen, wie Isocyanate, Polyole, Stabilisatoren, Tenside, etc. entsprechend auswählt, um den jeweils gewünschten Polyurethan-Typ, insbesondere Polyurethanschaum-Typ, zu erhalten. Weitere Angaben zu den einsetzbaren Ausgangsstoffen, Katalysatoren sowie Hilfs- und Zusatzstoffen finden sich beispielsweise im Kunststoffhandbuch, Band 7, Polyurethane, Carl-Hanser-Verlag München, 1. Auflage 1966, 2. Auflage, 1983 und 3. Auflage, 1993. Die nachstehenden Verbindungen, Komponenten und Zusatzstoffe sind lediglich beispielhaft genannt und können durch andere dem Fachmann bekannte Stoffe ersetzt und/oder ergänzt werden.

Als Isocyanatkomponenten werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Bevorzugt werden Isocyanate in einem Bereich von 60 bis 150 mol%, besonders bevorzugt in einem Bereich von 80 bis 130 mol%, relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-lsocyanato-3,3,5-trimethyl-5-isocyanatomethylcyclohexan (Isophorondiisocyanat oder kurz IPDI), 2,4- und 2,6-Hexa-hydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden.
Es ist auch möglich, Isocyanate einzusetzen, die durch den Einbau von Urethan-, Uretdion-, Isocyanurat-, Allophanat- und anderen Gruppen modifiziert wurden, sog. modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Präpolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Als Polyolkomponente geeignete Polyole im generellen Sinne sind alle organischen Substanzen mit mehreren gegenüber Isocyanaten reaktiven Gruppen, vorzugsweise OH-Gruppen, sowie deren Zubereitungen. Im Normalfall bezeichnet man damit allerdings polymere Verbindungen mit mehreren OH-Gruppen. Die Molmasse des Polyols ist dabei größer 500 g/mol. Dies grenzt Polyole von den niedermolekularen Vernetzern ab, die als Hilfsmittel speziell bei Kaltblockweichschaumstoffen eingesetzt werden.

Bezogen auf die gesamte Polyolkomponente werden > 50 Gew.-% Kaltweichschaum-Ether-Polyole mit Molmassen von > 1500 g/mol pro OH-Gruppe eingesetzt. Entsprechende Kaltweichschaum-Ether-Polyole haben eine OH-Funktionalität von 3, d.h. sie werden gewöhnlich aus Startern wie Glyzerin oder Trimethylolpropan durch Alkoxylierung erhalten. Die Molmasse insgesamt beträgt daher > 4500 g/mol. Ferner sind entsprechende Kaltweichschaum-Ether-Polyole durch überwiegend primäre OH Gruppen gekennzeichnet. Der Anteil an primären OH-Gruppen an den OH-Gruppen insgesamt beträgt dabei > 60 mol-%. Erreicht werden kann dies durch eine späte Zugabe von Ethylenoxid bei der Alkoxylierungsreaktion. Kaltweichschaum-Ether-Polyole werden oft mit festen polymeren Füllstoffen angeboten, wobei diese Füllstoffe reaktiv an das umgebende Kaltschaum-Ether-Polyol angebunden sind. Diese werden in der PU-Industrie oft auch als Kaltschaum-Polymerpolyole bezeichnet, wenngleich genau genommen auch schon ein normales Kaltschaum-Ether-Polyol ohne Füllstoffe ein polymeres Polyol ist. Die Kaltschaum-Polymerpolyole sind also eine Untermenge der Kaltweichschaum-Ether-Polyole. Als polymere Füllstoffe kommen für Kaltschaum-Ether-Polyole z.B. Kopolymerisate aus Styrol-Acrylnitril (SAN) oder PHD (Polyharnstoff-Dispersion) (durch Reaktion von Hydrazin mit Polyisocyanat) oder PIPA (Polyisocyanat Polyadditions Produkte) (durch Reaktion von Alkanolamin mit Polyisocyanat) in Betracht. Wichtig für Polymerpolyole für Kaltweichschaum ist, dass die flüssige Phase ein Kaltweichschaum-Ether-Polyol ist, d.h eine Molmasse > 4500 g/mol hat und überwiegend (> 60%) primäre OH-Gruppen aufweist.

Bevorzugte Polyole sind alle zur Herstellung von Polyurethan-Systemen, insbesondere PolyurethanSchaumstoffen; üblicherweise verwendeten Polyetherpolyole und/oder hydroxyl-gruppenhaltigen aliphatischen Polycarbonate, insbesondere Polyetherpolycarbonatpolyole und/oder Füllkörperpolyole (Polymerpolyole) wie SAN-, PHD- und PIPA-Polyole, die sich dadurch auszeichnen, dass sie feste organische Füllstoffe bis zu einem Feststoffgehalt von 40 % oder mehr in disperser Verteilung enthalten, und/oder autokatalytische Polyole, die katalytisch aktive funktionelle Gruppen, insbesondere Amino-Gruppen, enthalten, und/oder Polyole natürlicher Herkunft, sogenannte "natural oil based polyols" (NOPs). Vorzugsweise besitzen die Polyole für PU-Kaltblockweichschaumstoff eine Funktionalität von 2,5 bis 4 und zahlengemittelte Molekulargewichte im Bereich von 4500 bis 8000 g/mol und bestehen mehrheitlich aus Propylenoxid-Einheiten. Üblicherweise kommen die Polyole mit OH-Zahlen im Bereich von 20 bis 45 mg KOH/g zum Einsatz. Die OH-Funktion ist dabei mehrheitlich primär. Dies wird durch Ethylenoxid-Endblöcke bei der Polyol-Herstellung erreicht.

Die zahlengemittelten Molekulargewichte werden üblicherweise durch Gelpermeationschromatographie (GPC), insbesondere mit Polypropylenglycol als Referenzsubstanz und Tetrahydrofuran (THF) als Elutionsmittel, bestimmt. Die OH-Zahlen können insbesondere nach der DIN-Norm DIN 53240-2:2007-11 bestimmt werden.

Gemäß einer weiteren bevorzugten Ausführungsform der Erfindung, können zusätzlich auch zweiund/oder dreifunktionelle Polyetheralkohole eingesetzt werden, die sekundäre Hydroxylgruppen, bevorzugt unter 50 %, besonders bevorzugt von 0% bis 25%, aufweisen, wie sie an sich für PU-Heißblockweichschaumstoff typisch sind.

In einer weiteren bevorzugten Ausführungsform können neben den hier beschriebenen Polyetheralkoholen vorzugsweise weitere Polyetheralkohole eingesetzt werden, die primäre Hydroxylgruppen tragen und insgesamt überwiegend auf Ethylenoxid basieren, insbesondere mit einem Anteil an Ethylenoxidblöcken von > 70 %, bevorzugt > 90 % ("Hypersoft-Polyol").

Alle im Sinne dieser bevorzugten Ausführungsform beschriebenen Polyetheralkohole besitzen vorzugsweise eine Funktionalität von 2 bis 8, besonders bevorzugt 2 bis 5, zahlengemittelte Molekulargewichte im Bereich von 500 bis 8000 g/mol, bevorzugt 500 bis 7000 g/mol und üblicherweise OH-Zahlen im Bereich von 10 bis 100 mg KOH/g, vorzugsweise 20 bis 60 mg KOH/g.

Dabei können Polyole mit primären OH-Funktionen bei den erfindungsgemäßen PU-Kaltweichschaumstoffen nicht nur allein, sondern auch in Kombination mit Polyolen mit sekundären OH-Gruppen eingesetzt werden. Dabei werden Polyole mit sekundären OH-Funktionen in der Kombination nur zu < 50 % verwendet.

Gemäß einer weiteren bevorzugten Ausführungsform der Erfindung, können autokatalytische Polyole eingesetzt werden. Diese enthalten in der Polyolstruktur katalytisch aktive Einheiten, sodass auf den Einsatz von separaten Katalysatoren zur Unterstützung der Reaktionen des Isocyanats verzichtet oder zumindest die Einsatzmenge reduziert werden kann.

Gemäß einer weiteren bevorzugten Ausführungsform der Erfindung, können Recycling-Polyole eingesetzt werden. Ein PU-Kaltblockweichschaumstoff-Körper, der unter Mitverwendung von Recycling-Polyolen erhalten wurde, entspricht demgemäß einer bevorzugten Ausführungsform der Erfindung. Bei Recycling-Polyolen handelt es sich um Polyole, die aus PU-Schaum-Abfall gewonnen werden. Dabei kann es sich um Produktionsabfall aus der PU-Kaltblockweichschaum-Produktion selbst oder aus PU-Kaltblockweichschaumabfall nach der Nutzung durch den Konsumenten (z.B. alte Matratzen) handeln. In beiden Fällen wird der PU-Schaumstoff durch chemische Prozesse verflüssigt. Hierbei kommen verschiedene Prozesse wie zum Beispiel Glykolyse, Hydrolyse oder Acidolyse in Betracht. Das erhaltene flüssige Recyclingpolyol kann dann erneut zur Herstellung von PU-Weichschaum eingesetzt werden. Allerdings zeichnen sich solche PU-Kaltblockweichschaumstoffe oft durch deutlich nachteilige mechanische Eigenschaften aus. Nähere Informationen zu der Verwendung von Recyclingpolyolen in PU-Heißblockweichschaumstoffen können unter anderem dem nachfolgenden Forschungsbericht des BMBF mit den Förderkennzeichen 01 RI05070 bis 01 RI05075 entnommen werden: https://www.cleaner-production.de/fileadmin/assets/bilder/BMBF-Proiekte/01R105070-075 - Abschlussbericht.pdf.

Die Mitverwendung von Recycling-Polyolen im Rahmen der Erfindung entspricht für alle beanspruchten Gegenstände jeweils einer bevorzugten Ausführungsform der Erfindung.

Erfindungsgemäß werden bevorzugt weniger als 2 Teile, vorzugsweise kein Polyesterether mit einer OH-Zahl von 55 bis 57 mgKOH/g pro 100 Teile Polyol eingesetzt. Solche Polyesterether werden in CN109970949A beschrieben.
Solche Polyesterether sind erhältlich durch Umsetzung von Polyethern, die wiederum durch Reaktion von Glycerol und Alkylenoxiden (wie Ethylenoxid und/oder Propylenoxid) zugänglich sind, mit Caprolacton und Verkappung mit weiterem Alkylenoxid (besonders Propylenoxid).

Ein bevorzugtes Verhältnis von Isocyanat und Polyol, ausgedrückt als Isocyanat-Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von > 95 bis ≤ 115. Ein Index von 100 steht für ein molares Verhältnis der reaktiven Gruppen von 1 zu 1.

Zur Herstellung der erfindungsgemäßen PU-Kaltblockweichschaumstoffe können auch Katalysatoren eingesetzt werden. Der Ausdruck Katalysatoren umfasst im Sinne dieser Erfindung alle Verbindungen nach dem Stand der Technik, die in der Lage sind Isocyanat-Reaktionen zu katalysieren und/oder bei der Herstellung von Polyisocyanat-Reaktionsprodukten, insbesondere von Polyurethanschaumstoffen, als Katalysatoren, Co-Katalysatoren oder Aktivatoren eingesetzt werden. Erfindungsgemäß wird zwingend ein Zinnkatalysator eingesetzt. Entsprechend einsetzbare Zinnkatalysatoren, wie z.B. Zinn(ll)ethylhexanoat sind dem Fachmann bekannt.

Geeignete Katalysatoren sind bekannt, es handelt sich insbesondere um Substanzen, die die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere tertiäre Amine und Ammonium-Salze, und/oder metallhaltige Verbindungen.

Beispiele für geeignete stickstoffhaltige Verbindungen als Katalysatoren im Sinne der vorliegenden Erfindung sind die Amine Triethylamin, N,N-Dimethylcyclohexylamin, N,N-Dicyclohexylmethylamin, N,N-Dimethylaminoethylamin, N,N,N',N'-Tetramethylethan-1,2-diamin, N,N,N',N'-Tetramethyl-propan-1,3-diamin, N,N,N',N'-Tetramethylbutan-1,4-diamin, N,N,N',N'-Tetramethylhexan-1,6-diamin, N-[2-(Dimethylamino)ethyl]-N,N',N'-trimethyl-1,2-ethandiamin, 2-[(2-(Dimethylamino)ethyl)-methylamino]ethanol, N',N'-Dimethylpropan-1,3-diamin, N',N'-Diethylpropan-1,3-diamin, 1-(2-Aminoethyl)pyrrolidin, 1-(3-Aminopropyl)pyrrolidin, 1-[3-(Dimethylamino)propyl-(2-hydroxypropyl)amino]propan-2-ol, 2-[[3-(Dimethylamino)propyl]methylamino]ethanol, 3-(2-Dimethyl-amino)ethoxy)propylamin, N-[3-(Dimethylamino)propyl]-N',N'-dimethylpropan-1,3-diamin, N'-[3-(Dimethylamino)propyl]-N,N,N'-trimethylpropan-1,3-diamin, 1-[Bis[3-(dimethylamino)propyl]-amino]-2-propanol, N,N-Bis[3-(dimethylamino)propyl]-N',N'-dimethylpropan-1,3-diamin, 1,4-Diazabicyclo[2.2.2]octan (auch bekannt als TEDA), 1,4-Diazabicyclo[2.2.2]octan-2-methanol, 1,2-Dimethylimidazol, N-(2-Hydroxypropyl)imidazol, 2-Methyl-1-(2-methylpropyl)imidazol, N-(3-Aminopropyl)imidazol, N-Methylimidazol, 1-(3-Aminopropyl)-2-methyl-1 H-imidazol, N-Ethylmorpholin, N-Methylmorpholin, 2,2,4-Trimethyl-2-silamorpholin, N-Ethyl-2,2-dimethyl-2-silamorpholin, N-(2-Aminoethyl)morpholin, N-(2-Hydroxyethyl)morpholin, 2,2'-Dimorpholinodiethylether, N,N'-Dimethylpiperazin, N-(2-Hydroxyethyl)piperazin, N-(2-Aminoethyl)piperazin, N,N-Dimethylbenzylamin, N,N-(Dimethylamino)ethanol (auch bekannt als DMEA), N,N-(Diethyl-amino)ethanol, 1-(2-Hydroxyethyl)pyrrolidin, 3-Dimethylamino-1-propanol, 1-(3-Hydroxypropyl)-pyrrolidin, 2-[2-(Dimethylamino)ethoxy]ethanol, 2-[2-(Diethylamino)ethoxy]ethanol, Bis(2-Dimethylaminoethyl)ether (auch bekannt als BDME), 2-[[2-(2-(Dimethylamino)-ethoxy)ethyl]methylamino]ethanol, N-[2-[2-(Dimethylamino)ethoxy]ethyl]-N-methyl-1,3-propandiamin, 1,3,5-Tris[3-(dimethylamino)propyl]hexahydro-1,3,5-triazin, 1,8-Diazabicyclo[5.4.0]undec-7-en, 1,5-Diazabicyclo[4.3.0]non-5-en, 1,5,7-Triazabicyclo[4.4.0]dec-5-en, N-Methyl-1,5,7-triazabicyclo[4.4.0]dec-5-en, 1,4,6-Triazabicyclo[3.3.0]oct-4-en, 1,1,3,3-Tetramethylguanidin, 2-tert-Butyl-1,1,3,3-tetramethylguanidin, Guanidin, 1,1'-[(3-{bis[3-(dimethylamino)propyl]amino}-propyl)imino]dipropan-2-ol, (3-Aminopropyl)bis[3-(dimethylamino)propyl]amin, 3-(Dimethylamino)-propylharnstoff, 1,3-Bis[3-(dimethylamino)propyl]harnstoff, 3-Dimethylamino-N,N-dimethyl-propanamid, 6-(Dimethylamino)hexan-1-ol und 2,4,6-Tris[(dimethylamino)methyl]phenol. Derartige Katalysatoren und/oder Mischungen werden beispielsweise unter dem Namen Jeffcat^{®} ZF-10, Lupragen^{®} DMEA, Lupragen^{®} API, Toyocat^{®} RX 20 und Toyocat^{®} RX 21 , DABCO^{®} RP 202, DABCO^{®} RP 204, DABCO^{®} NE 300, DABCO^{®} NE 310, DABCO^{®} NE 400, DABCO^{®} NE 500, DABCO^{®} NE 600, DABCO^{®} NE 650, DABCO^{®} NE 660, DABCO^{®} NE 740, DABCO^{®} NE 750, DABCO^{®} NE 1060, DABCO^{®} NE 1080, DABCO^{®} NE 1082 und DABCO^{®} NE 2039, Niax^{®} EF 860, Niax^{®} EF 890, Niax^{®} EF 700, Niax^{®} EF 705, Niax^{®} EF 708, Niax^{®} EF 600, Niax^{®} EF 602 und TEGOAMIN^{®} ZE 1 im Handel angeboten.

Geeignete metallhaltige Verbindungen als Katalysatoren können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der Metall-Chelat-Komplexe. Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt lonenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, Metall-Oxide (z.B. Zinn-Oxide) und/oder Metall-Silicate oder - Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe). Geeignete metallhaltige Verbindungen, insbesondere wie oben definiert, als Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth und/oder Zink.

Geeignete metallhaltige Koordinationsverbindungen sind zum Beispiel alle Metall-Acetylacetonate wie Nickel(II)-acetylacetonat, Zink(II)-acetylacetonat, Kupfer(II)-acetylacetonat, Molybdändioxoacetylacetonat, alle Eisen-acetylacetonate, alle Cobalt-acetylacetonate, alle Zirconiumacetylacetonate, alle Titan-acetylacetonate, alle Bismuth-acetylacetonate und alle Zinnacetylacetonate. Besonders geeignete metallorganische Salze und organische Metallsalze, insbesondere wie oben definiert, als Katalysatoren im Sinne der vorliegenden Erfindung sind zum Beispiel Organozinn-, Zinn-, Zink-, Bismuth und Kalium-Salze, insbesondere entsprechende MetallCarboxylate, -Alkoholate, -Thiolate und -Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercaptoacetat, Dimethylzinn-bis-2-ethylhexylmercapto-acetat, Dibutylzinn-bis-2-ethylhexylmercaptoacetat, Dioctylzinn-bis-isooctylmercaptoacetat, Zinn(II)-acetat, Zinn(II)-2-ethyl-hexanoat (Zinn(II)-octoat), Zinn(II)-isononanoat (Zinn(II)-3,5,5-trimethylhexanoat), Zinn(II)-neodecanoat, Zinn(II)-ricinoleat, Zink(II)-acetat, Zink(II)-2-ethyl-hexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kaliumneodecanoat und/oder Kalium-ricinoleat. Geeignete metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen. Kommerzielle Produkte sind zum Beispiel KOSMOS^{®} T 9, KOSMOS^{®} 54, KOSMOS^{®} EF, KOSMOS^{®} T 900.

Geeignete Katalysatoren sind beispielsweise in DE 102007046860, EP 1985642, EP 1985644, EP 1977825, US 2008/0234402, EP 0656382 B1 und US 2007/0282026 A1 und den darin zitierten Patentschriften genannt.

Geeignete Einsatzmengen an Katalysatoren richten sich nach dem Typ des Katalysators und liegen vorzugsweise im Bereich von 0,01 bis 5,0 pphp, besonders bevorzugt im Bereich von 0,02 bis 3,00 pphp (= Gewichtsteile bezogen auf 100 Gewichtsteile Polyol). Katalysatoren können gegenüber Isocyanaten reaktive OH- und NH-Gruppen aufweisen, aber maximal 2 pro Molekül. Dadurch werden sie von den Vernetzern abgegrenzt. Die OH-Zahlen der kommerziellen Produkte resultieren dabei oft aus den zur Verdünnung der Katalysatoren in gebrauchsfertige Zubereitungen eingesetzten Glykolen und Polyethern.

Als optionale Zusatzstoffe können alle nach dem Stand der Technik bekannten Substanzen verwendet werden, die bei der Herstellung von Polyurethanen, insbesondere von PU-Kaltblockweichschaumstoffen, Verwendung finden, wie zum Beispiel Treibmittel, vorzugsweise Wasser zur Bildung von CO₂ und, falls nötig, weitere physikalische Treibmittel, Kettenverlängerer (difunktionelle Verbindungen wie Glykole), Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker und Viskositätsregler, Farbstoffe, Pigmente, Farbpasten, Duftstoffe, Emulgatoren, Puffersubstanzen und/oder katalytisch aktive Substanzen, insbesondere wie oben definiert.

Bei der Herstellung von PU-Kaltblockweichschaumstoffen wird in der Regel Wasser als Treibmittel eingesetzt. Vorzugsweise wird so viel Wasser eingesetzt, dass die Wassermenge 1,0 bis 4,0 pphp beträgt (pphp = parts per hundred parts polyol = Gewichtsteile bezogen auf 100 Gewichtsteile Polyol).

Es können auch geeignete physikalische Treibmittel eingesetzt werden. Dies sind beispielsweise verflüssigtes CO₂, und leichtflüchtige Flüssigkeiten, beispielsweise Kohlenwasserstoffe mit 3, 4 oder 5 Kohlenstoff-Atomen, bevorzugt cyclo-, iso- und n-Pentan, Sauerstoff-haltige Verbindungen wie Methylformiat, Aceton und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Geeignete optionale Stabilisatoren gegen oxidativen Abbau, so genannte Antioxidantien, sind vorzugsweise alle gängigen Radikalfänger, Peroxidfänger, UV-Absorber, Lichtstabilisatoren, Komplexbildner für Metallionenverunreinigungen (Metalldeaktivatoren). Bevorzugt einsetzbar sind Verbindungen folgender Substanzklassen, bzw. Substanzklassen enthaltend folgende funktionelle Gruppen, wobei als Substituenten an den jeweiligen Grundkörpern insbesondere diejenigen bevorzugt sind, die gegenüber Isocyanat reaktive Gruppen besitzen: 2-(2'-Hydroxyphenyl)benzotriazole, 2-Hydroxybenzophenone, Benzoesäuren und Benzoate, Phenole, insbesondere enthaltend tert-Butyl- und oder Methylsubstituenten am Aromaten, Benzofuranone, Diarylamine, Triazine, 2,2,6,6-Tetramethylpiperidine, Hydroxylamine, Alkyl- und Arylphosphite, Sulfide, Zinkcarboxylate, Diketone.

Geeignete optionale Flammschutzmittel im Sinne dieser Erfindung sind alle Substanzen, die nach dem Stand der Technik als dafür geeignet betrachten werden. Bevorzugte Flammschutzmittel sind beispielsweise flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Zur Stabilisierung der aufsteigenden Schaummischung und zur Beeinflussung der Schaumeigenschaften von Polyurethanschäumen können bei der Herstellung von PU-Kaltblockweichschaumstoffen gewöhnlich organomodifizierte und nichtmodifizierte Siloxane eingesetzt werden. Die Herstellung dieser Verbindungen kann wie im Stand der Technik beschrieben erfolgen. Geeignete Beispiele sind z.B. in US 7 838 566B2 beschrieben. Schaumstabilisatoren für PU-Kaltblockweichschaumstoffe sind charakterisiert durch relativ kleine modifizierte oder unmodifizierte Siloxanstrukturen mit weniger als 30 Si-Einheiten und optional angehängten Polyethern. Die polyethermodifizierten Schaumstabilisatoren werden auch als Polydialkylsiloxan-Polyoxyalkylen-copolymeren bezeichnet daneben werden für Kaltblockweichschaumstoffe auch unmodifizierte Siloxanstrukturen verwendet. Aufgabe des Schaumstabilisators ist es dabei, die Stabilität der aufschäumenden Reaktionsmischung zu gewährleisten und die Zellstruktur des gebildeten PU-Kaltweichschaumstoffs zu beeinflussen. Ohne Schaumstabilisator wird ein Kollaps beobachtet und damit kein homogener Schaumstoff erhalten. Beim Einsatz von langkettigen und damit potenteren Siloxanstabilisatoren wie sie für PU-Heißweichschaumstoff typisch sind, wird dagegen bei PU-Kaltblockweichschaumstoffen eine Überstabilisierung und damit ein Schrumpfen nach der Schaumherstellung beobachtet.

Vernetzer wurden bereits beschrieben. Bei den Vernetzern erfolgt die Berechnung der OH-Zahl gemäß dem in der Wissenschaft üblichen Verfahren aus der Molmasse und der Anzahl der OH-Gruppen. Bei wasserhaltigen Mischungen wird dabei in der PU-Industrie und für die Zwecke der vorliegenden Erfindung Wasser nicht berücksichtigt, da es als chemisches Treibmittel (Reaktion mit dem Isocyanat) separat betrachtet werden muss. OH-Zahlen (in mg KOH pro g Probe) berücksichtigen daher nicht den Wassergehalt, der separat ausgewiesen sein muss. Die OH-Zahl kann auch durch analytische Messung bestimmt werden (z.B. DIN 53240-2:2007-11), allerdings muss sie bei wasserhaltigen Proben mit der Wasserbestimmung (nach Karl Fischer gemäß ISO 760:1978) kombiniert werden, um die OH-Zahl ohne Wasser zu berechnen. Die erweiterte OH-Zahl ist die Summe aus der konventionellen OH-Zahl ohne Wasser und der Aminzahl bezogen auf primäre und sekundäre Amine.

Die erfindungsgemäßen stickstoffarmen oder stickstofffreien Vernetzer für Kaltblockschaumstoff können zum Beispiel mit geeigneten Lösungs- und Verdünnungsmitteln und/oder weiteren Zusatzstoffen eingesetzt werden. Als optionale Lösungsmittel kommen alle nach dem Stand der Technik geeigneten Substanzen in Frage. Besonders geeignet erscheinen dabei Wasser, Carbonsäure-Ester (z.B. Ester von Fettsäuren) und Polyester, Alkohole, Glycole und Polyether. Die erfindungsgemäßen Vernetzer stellen dabei jeweils bevorzugt mehr als 50 % der Mischung dar. Besonders bevorzugt sind Lösungsmittel, die in der Polyurethan-Kaltblockweichschaum-Verschäumung problemlos verarbeitet werden können und die Eigenschaften des Schaums nicht negativ beeinflussen. So sind zum Beispiel Isocyanat-reaktive Verbindungen geeignet, da diese mit in die Polymermatrix einreagieren und keine Emissionen im Schaum generieren. Dabei ist die Funktionalität der gewählten Lösungsmittel ≤ 2. Beispiele sind OH-funktionelle Verbindungen wie Wasser, (Poly-)Alkylenglykole, vorzugsweise Monoethylen-glycol (MEG oder EG), Diethylenglycol (DEG), Triethylenglycol (TEG), 1-2-Propylen-glycol (PG), Dipropylenglycol (DPG), Trimethylenglycol (1,3-Propandiol PDO), Tetra-methylenglycol (Butandiol BDO), Butyldiglycol (BDG), Neopentylglycol, 2-Methyl-1,3-propan-diol (ORTEGOL^{®} CXT) und höhere Homologe davon wie zum Beispiel Polyethylenglykol (PEG) mit mittleren Molekülmassen zwischen 200 g/mol und 3000 g/mol. Weitere besonders bevorzugte OH-funktionelle Verbindungen sind Polyether mit mittleren Molekülmassen von 200 g/mol bis 4500 g/mol, insbesondere 400 g/mol bis 2000 g/mol, insbesondere solche, die auf Propylenoxid- (PO) und/oder Ethylenoxid-blöcken (EO) basieren.

Die erfindungsgemäßen Vernetzer oder die erfindungsgemäße Vernetzermischung kann gemäß bevorzugten Ausführungsformen der Erfindung pur oder abgemischt mit Lösungsmitteln oder jeder anderen Komponente der Kaltblockschaumformulierung der Kaltblockschaumstoff-Herstellung zugesetzt werden.

Es kann besonders vorteilhaft sein, wenn bei der Herstellung des PU-Kaltblockweichschaumstoffs eine Zusammensetzung hergestellt und/oder eingesetzt wird, die zumindest die erfindungsgemäßen stickstofffreien oder allenfalls stickstoffarmen Vernetzer oder eine Mischung der erfindungsgemäßen Vernetzer und zumindest eine Polyolkomponente sowie optional ein oder mehrere Treibmittel (inkl. Wasser) aufweist.

Es ist bevorzugt, dass die erfindungsgemäßen stickstofffreien oder allenfalls stickstoffarmen Vernetzer oder eine Mischung der erfindungsgemäßen Vernetzer jeweils in Gesamtmenge in einem Massenanteil von 0,1 bis 5,0 Teilen (pphp), bevorzugt 0,3 bis 3,0 Teilen und besonders bevorzugt 0,5 bis 2,0 Teilen bezogen auf 100 Teile (pphp) Polyolkomponente eingesetzt werden.

Die Produktion der erfindungsgemäßen PU-Kaltblockweichschaumstoffe kann nach allen dem Fachmann geläufigen Verfahren erfolgen, beispielsweise im Handmischverfahren oder bevorzugt mit Hilfe von Verschäumungsmaschinen, insbesondere Niederdruck- oder Hochdruck-Verschäumungsmaschinen. Dabei wird der aufsteigende Schaum nicht durch eine Form in seiner Ausdehnung an allen Seiten begrenzt. Es handelt sich daher um einen frei gestiegenen Schaum oder Blockschaum. Die üblichen Begrenzungen bei Blockschaummaschinen nach unten (Boden) oder zu den Seiten (Seitenwände) sind dabei nicht zu betrachten, da der Schaum nach oben expandieren kann.

Es können alle dem Fachmann bekannten Verfahren zur Herstellung von PU-Kaltblockweichschaumstoffen verwendet werden. So kann zum Beispiel der Schäumungsprozess sowohl in horizontaler als auch in vertikaler Richtung, in diskontinuierlichen oder kontinuierlichen Anlagen erfolgen. Ebenso können die erfindungsgemäß eingesetzten Zusammensetzungen für die CO₂-Technologie benutzt werden. Die Verwendung in Niederdruck- und Hochdruckmaschinen ist möglich, wobei die zu verarbeitenden Zusammensetzungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

### Beispiele:

Zur Überprüfung des erfindungsgemäßen Effekts wurden Kaltblockweichschaumversuche mit folgender Grundrezeptur durchgeführt:

| |
|---|
| 100,00 Teile VORALUX^{®} HN 360 |
| 2,49 Teile Wasser separat (2,70 Teile Wasser inkl. Wasser in Additiven) |
| 0,15 Teile DABCO^{®} 33 LV |
| 0,05 Teile DABCO^{®} BL 11 |
| 0,15 Teile KOSMOS^{®} T 9 |
| 0,30 Teile TEGOSTAB^{®} B 8783 LF 2 |
| 1,40 Teile DABCO^{®} DEOA LF (85%)(15% Wasser) |
| TDI 80, Index <105> |

Diese Formulierung stellt den typischen Stand der Technik dar. Sie basiert auf etablierten Rohstoffen und setzt als Vernetzer eine stickstoffhaltige Verbindung (Diethanolamin als DABCO^{®} DEOA LF) ein. Die Formulierung ist nicht VOC optimiert, da speziell die Aminkatalysatoren flüchtig sind. Die vorliegende Formulierung nach dem Stand der Technik weist akzeptable, aber noch verbesserungsfähige Alterungs- und Kompressionseigenschaften auf. Dies zeigt sich bei den folgenden Versuchen dann bei schlechteren Werten im Trocken-Kompressionstest (Dry compression set).

Zur Verbesserung im Sinne dieser Erfindung wurden verschiedene Vernetzer anstelle des Diethanolamins eingesetzt. Hierbei kam ein weiterer stickstoffhaltiger Vernetzer (Diisopropanolamin) zum Einsatz. Zum Vergleich wurde auch ein Cold-Flow-Additiv eingesetzt. Dieses Cold-Flow-Additiv enthält ebenfalls teilweise vernetzende Komponenten, hat aber eine niedrigere erweiterte OH-Zahl. Es ist ebenfalls stickstoffhaltig. Der typische Einsatz des Cold-Flow-Additivs erfolgt bei großtechnischen Anlagen, indem Diethanolamin reduziert wird (typischerweise 50%) und solch ein Cold-Flow-Additiv (ORTEGOL^{®} 204) zugegeben wird. Ziel ist es dabei, eine rasche Vernetzung des hergestellten Kaltblockweichschaumstoffs im Reaktionslager zu erreichen, was die Dimensionsstabilität der Schaumstoffblöcke bei der Aushärtung und Lagerung fördert. Diese Technologie ist ebenfalls Stand der Technik. Sie ermöglicht allerdings nicht die erfindungsgemäß angestrebte Verbesserung der Alterungs- Kompressions- und Dauergebrauchseigenschaften, sodass das zu lösende Problem weiterhin besteht.

Erfindungsgemäß wurden dann stickstoffhaltige Vernetzer vollständig durch praktisch stickstofffreie Vernetzer (Stickstoffgehalt < 0,5 Gew.% ) mit einer Funktionalität f >=3 ersetzt.

Ein Beispiel ist dabei der Einsatz einer speziellen stickstoffarmen Vernetzermischung bestehend aus einem Zuckeralkohol, einem oder mehreren weiteren niedermolekularen Vernetzern und Wasser als Lösungsmittel. Es wurden überraschend positive Effekte hinsichtlich der Alterungs-, Kompressionsund Dauergebrauchseigenschaften erhalten. Auch waren die Eigenschaften des gebildeten Kaltblockweichschaumstoffs in allen anderen Parametern zufriedenstellend. Diese Mischung wurde als "stickstoffarme Vernetzermischung" untersucht.

### Eingesetzte Rohstoffe:

VORALUX^{®} HN 360: Polymerpolyol der Firma DOW mit 16% Polymerpartikeln. Das Basispolyol hat eine Molmasse von 5000 g/mol. VORALUX^{®} HN 360 hat eine OH-Zahl von 30 mg KOH/g. Auch die erweiterte OH-Zahl beträgt 30 mg KOH/g.

D-Sorbitol (auch D-Glucitol oder Sorbit): Vernetzer mit 6 OH-Gruppen und einer Molmasse von 182,2 g/mol. Daraus ergibt sich eine OH-Zahl von 1848 mg KOH/g. Eingesetzt wurde kristallines D-Sorbitol der Firma Sigma Aldrich. Auch die erweiterte OH-Zahl beträgt 1848 mg KOH/g.

Maltitol: Vernetzer mit 9 OH-Gruppen und einer Molmasse von 344,3 g/mol. Daraus ergibt sich eine OH-Zahl von 1467 mg KOH/g. Eingesetzt wurde Maltitol der Firma Sigma Aldrich. Auch die erweiterte OH-Zahl beträgt 1467 mg KOH/g.

Diglycerin oder Diglycerol (auch Bis(2,3-dihydroxypropyl) ether): Vernetzer mit 4 OH-Gruppen und einer Molmasse von 166 g/mol. Daraus ergibt sich eine OH-Zahl von 1352 mg KOH/g. Eingesetzt wurde ein technisches Produkt (>85%) der Firma Sigma Aldrich. Auch die erweiterte OH-Zahl beträgt 1352 mg KOH/g.

Triglycerin: Vernetzer mit 5 OH-Gruppen und einer Molmasse von 240,25 g/mol. Daraus ergibt sich eine OH-Zahl von 1168 mg KOH/g. Eingesetzt wurde Triglycerin der Firma Sigma Aldrich. Auch die erweiterte OH-Zahl beträgt 1168 mg KOH/g.

DABCO^{®} 33 LV: Aminkatalysator zur Unterstützung der Gelreaktion der Firma Evonik Operations GmbH bestehend aus 33 % Diazabicyclooctan (CAS 205-999-9) und 67% Dipropylenglykol. OH-Zahl des Produktes: 560 mg KOH/g. Auch die erweiterte OH-Zahl beträgt 560 mg KOH/g, da nur tertiäre Amingruppen vorliegen. DABCO^{®} 33 LV ist ein Aminkatalysator und hat keine vernetzende Wirkung.

DABCO^{®} BL 11: Aminkatalysator zur Unterstützung der Treibreaktion der Firma Evonik Operations GmbH bestehend aus 70 % Bis(dimethylaminoethyl)ether (CAS 3033-62-3) und 30% Dipropylenglykol. OH-Zahl des Produktes: 251 mg KOH/g. Auch die erweiterte OH-Zahl beträgt 251 mg KOH/g, da nur tertiäre Amingruppen vorliegen. DABCO^{®} BL 11 ist ein Aminkatalysator und hat keine vernetzende Wirkung.

KOSMOS^{®} T 9: Zinnkatalysator zur Unterstützung der Gelreaktion bestehend aus Zinn(II)-ethylhexanoat (CAS 301-10-0).

DABCO^{®} DEOA LF: aminhaltiger Vernetzer der Firma Evonik Operations GmbH bestehend aus 85% Diethanolamin (CAS 111-42-2) und 15% Wasser. Die OH-Zahl (ohne Wasser!) beträgt für DABCO^{®} DEOA LF 908 mg KOH/g. Zusätzlich beträgt die Aminzahl wegen der sekundären Aminfunktion für das 85%ige Produkt 454 mg KOH/g. Die erweiterte OH-Zahl des DABCO^{®} DEOA LF beträgt somit etwa 1362 mg KOH/g.

TEGOSTAB^{®} B 8783 LF 2: Silikonbasierter Schaumstabilisator der Firma Evonik Operations GmbH. OH-Zahl: 133 mg KOH/g.

Erfindungsgemäßes Vernetzer-Additiv (= stickstoffarme Vernetzermischung), besteht aus:
a) Sorbitol und/oder Maltitol (40 - 60 Gew.% der Mischung)
b) Diglycerin und/oder Triglycerin (15-30 Gew.% der Mischung)
c) Wasser (15 - 35 Gew.% der Mischung),
wobei die erweiterte OH-Zahl der Vernetzermischung 1200 - 1300 mg KOH /g beträgt (ohne Berücksichtigung des Wassers, welches als chemisches Treibmittel bei der PU-Schaumstoffherstellung separat eingerechnet werden muss).

ORTEGOL^{®} 204: Mischung aus linearen Polyethern, Vernetzern, Harnstoff und Wasser zur Verbesserung der Blockstabilität von Kaltweichschaumstoffblöcken bei der Aushärtung (Cold-Flow-Additiv). Das Produkt ist erhältlich von der Firma Evonik Operations GmbH. ORTEGOL^{®} 204 enthält 25 % Wasser und hat eine erweiterte OH-Zahl von 860 mg KOH/g.

Diisopropanolamin: technisches Diisopropanolamin. Erhältlich von der Firma Sigma Aldrich. Die OH-Zahl beträgt 842,5 mg KOH/g. Zusätzlich resultiert eine Aminzahl aus der sekundären Aminfunktion von 421 mg KOH/g. Die erweiterte OH-Zahl des Diisopropanolamin beträgt somit 1263 mg KOH /g. Diisopropanolamin ist ein aminbasierter Vernetzer.

DABCO^{®} NE 1082: emissionsarmer Aminkatalysator zur Unterstützung der Gelreaktion der Firma Evonik Operations GmbH basierend auf 1,3-Bis[3-dimethylamino)propyl]harnstoff (CAS 52338-87-1). Die erweiterte OH-Zahl beträgt 15 mg KOH/g. Diese resultiert aus aminhaltigen Nebenprodukten in dem technischen Produkt. DABCO^{®} NE 1082 ist ein Aminkatalysator und hat keine vernetzende Wirkung.

DABCO^{®} NE 300: emissionsarmer Aminkatalysator zur Unterstützung der Treibreaktion der Firma Evonik Operations GmbH basierend auf N-[2-[2-(dimethylamino) ethoxy] ethyl]-N-methyl-1,3-propanediamine (CAS 189253-72-3). Die erweiterte OH-Zahl beträgt 276 mg KOH/g. Sie ergibt sich aus der primären Amingruppe des Produktes. DABCO^{®} NE 300 ist ein Aminkatalysator und hat keine vernetzende Wirkung.

KOSMOS^{®} EF: emissionsarmer Zinnkatalysator zur Unterstützung der Gelreaktion der Firma Evonik Operations GmbH.

TDI 80: Technisches Tolulylendiisocyanat der Firma Covestro, Leverkusen, Markenname Desmodur^{®} T80, NCO-Gehalt: 48%.

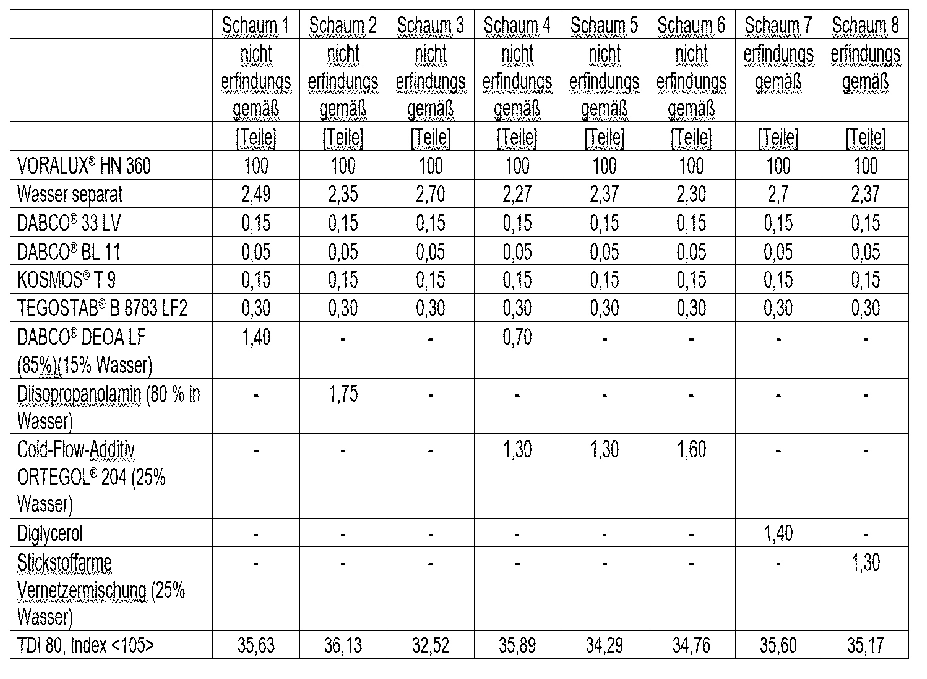

### Emissionsoptimierte Formulierung:

Bei der emissionsoptimierten Formulierung sind die nicht VOC optimierten Katalysatoren gegen emissionsoptimierte Varianten ausgetauscht. Dadurch ist auch der resultierende Kaltblockweichblockschaum emissionsarm.

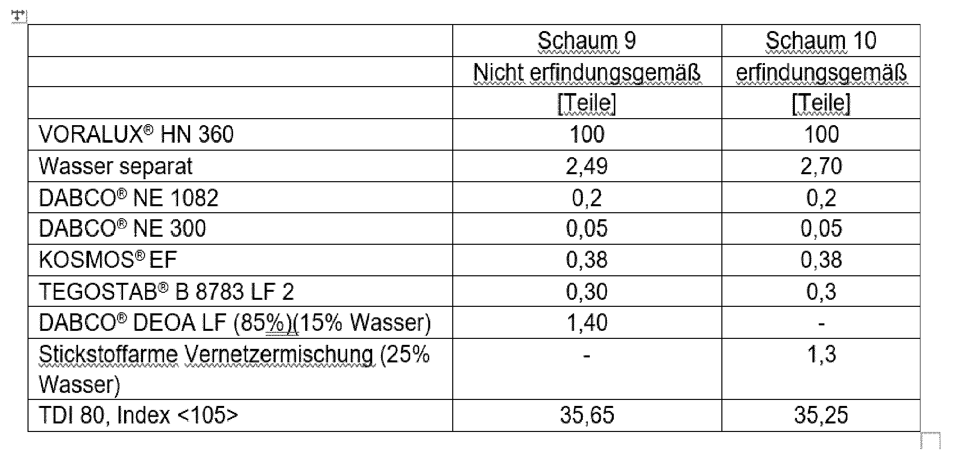

### Methoden:

### Analyse der Rohstoffe:

Analyse des Stickstoffgehalts: Die Analyse des Stickstoffgehalts der eingesetzten Vernetzer erfolgt mittels der allgemein bekannten Kjeldahl-Methode, wie sie in unter anderem in DIN EN 13342:2001-01 oder DIN EN 13654-1:2002-01 für andere Substrate beschrieben wird.

Schaumverhalten: Generelle Beobachtung: Auffälligkeiten bei der Expansion des Kaltblockweichschaumstoffs wie Kollaps des sich bildenden Schaumstoffs oder Schrumpf des aushärtenden Schaumstoffs.

Steigzeit: Unter der Steigzeit versteht man die Zeitspanne zwischen dem Ende des Mischens der Rohstoffe und dem Erreichen der maximalen Schaumhöhe. Sie ist ein Maß für die Reaktivität der Formulierung und eine wichtige Kenngröße bei der industriellen Blockschaumproduktion.

Rückfall: Der Rückfall ergibt sich aus der Differenz der maximalen Schaumhöhe beim Aufsteigen des Schaumstoffs zu der Schaumhöhe 5 min später. Grund für den Rückfall ist die Zellöffnung des Schaumstoffs, die es dem Gas erlaubt, zu entweichen bis durch die fortschreitende Reaktion eine Verfestigung des Polyurethanmaterials erfolgt. Der Rückfall ist ein Indikator für die Stabilität der Formulierung.

### Charakterisierung der Kaltblockschaumstoffeigenschaften:

Zahl der Zellen pro cm (Zellzahl): Diese wird auf einer Schnittfläche optisch bestimmt (gemessen gemäß DIN EN 15702:2009-04). Die Zahl der Zellen wird entlang einer Linie gezählt.

Dichte: Die Bestimmung erfolgt, wie in ASTM D 3574 - 11 unter Test A beschrieben, durch Messung der Kerndichte. Das Raumgewicht wird in kg/m³ angegeben.

### Porosität gemäß FTC (Force to crush) Methode:

Kaltschäume weisen immer einen hohen Anteil an geschlossenen Zellen auf. Dies kann zur Folge haben, dass der Schaumkörper nach dem Schneiden nicht formstabil bleibt. Weiterhin neigt der Schaum zum Schrumpfen und kann somit unbrauchbar werden. Zudem ist bekannt, dass der PU-Kaltblockschaum erst dann seine hohe Flexibilität aufweist, wenn die Zellstruktur vollständig geöffnet ist. PU-Kaltblockschäume werden daher in der Praxis grundsätzlich mittels geeigneter Technologien, wie z. B. das Vakuumverfahren oder mittels einer Walzenanlage, aufgedrückt. Dieser Vorgang soll schonend, d. h. ohne großen Kraftaufwand, erfolgen. Zudem soll die Zellstruktur möglichst vollständig aufgedrückt werden. Beide Bedingungen, die Leichtigkeit des Aufdrückens als auch die Vollständigkeit, kann mittels eines einfachen Verfahrens geprüft werden.

### Durchführung:

Hierzu wird das zu prüfende Schaumstück (möglichst ohne es zu komprimieren) unter die Aufdrückmaschine gelegt. Auf der Druckprüfmaschine wird die Eindruckhärte (ILD) bei 50 % Stauchung ermittelt. Dieser Vorgang wird 10 X am frischen Schaum durchgeführt. Nach vollständiger mechanischer Öffnung wird, der der Vorgang noch ein 11. mal wiederholt. Die Differenz aus erstem und letztem Wert gibt hier die Gesamtgeschlossenzelligkeit des Schaumes an. Der 11. Wert ist ein Maß für die Härte des Schaumstoffs.

Rückprallelastizität: Die Rückprallelastizität wird bestimmt durch ein Kugelfallexperiment. Dieses ist definiert in DIN EN ISO 8307:2008-03. Dabei wird ein vollständig aufgedrückter Schaumstoff untersucht.

Härte: Die Härte oder Stauchhärte der gebildeten PU-Kaltschaumstoffe wird gemessen gemäß DIN EN ISO 3386-1:2015-10 durch Stauchung um 40% und Messung der resultierenden Kraft (CLD 40).

Komfortfaktor: Ein mechanisches Kriterium stellt der SAG- oder Komfortfaktor dar. Hierbei wird eine Schaumprobe gemäß DIN EN ISO 2439:2009-05 komprimiert und das Verhältnis der Druckspannung bei 65% und 25% Kompression gemessen. PU-Kaltweichschäume haben dabei einen SAG- oder Komfort-Faktor von vorzugsweise > 2,5.

Compression Set (90°C, 70%) [%]: Der Compression Set oder Druckverformungsrest wird gemessen gemäß DIN EN ISO 1856 :2008-01. Hierbei werden Schaumstoffprobenkörper komprimiert und im komprimierten Zustand unter definierten Bedingungen gelagert. Bei dem hier durchgeführten Test wurden die Schaumstoffprobenkörper 70% komprimiert und dann bei 90°C in einem Ofen für 22 h gelagert. Es wurden jeweils 6 Probenkörper untersucht und anschließend das Ergebnis gemittelt.

Wet Compression Set (75°C und 80°C, 70%) [%]: Der Wet Compression Set oder Feuchtwärmealterung wird gemessen gemäß DIN EN ISO 1856 :2008-01. Hierbei werden Schaumstoffprobenkörper komprimiert und im komprimierten Zustand unter definierten Bedingungen in einer Atmosphäre mit 100% Luftfeuchte gelagert. Bei dem hier durchgeführten Test wurden die Schaumstoffprobenkörper 70% komprimiert und dann bei 80°C oder bei 75°C für 22 h gelagert. Es wurden jeweils 6 Probenkörper untersucht und anschließend das Ergebnis gemittelt.

VOC-Test: Die Reaktionsmischung wird in einen oben offenen PE-Plastikbeutel gegeben. Nach dem Aufsteigen und Abblasen des Schaumstoffs wird 3 min nach dem Abblasen der PE-Beutel geschlossen. So wird der Schaumstoff für 12 Stunden bei Raumtemperatur gelagert, um eine vollständige Reaktion zu ermöglichen, aber gleichzeitig ein vorzeitiges Entweichen von VOC-Stoffen zu vermeiden. Anschließend wird der PE-Beutel geöffnet und aus dem Zentrum des Schaumstoffblocks ein 7 cm x 7 cm x 7 cm großer Würfel entnommen und sofort in Aluminiumfolie gewickelt und in einem PE-Beutel luftdicht eingeschlossen. Nun wird er in das analytische Labor transportiert und der Schaumstoffwürfel in eine gereinigte 30L Glasprüfkammer gegeben. In der Prüfkammer herrschen kontrollierte klimatische Bedingungen (Temperatur 21°C, Luftfeuchte 50%). Die Prüfkammer wird pro Stunde von dem halben Prüfkammervolumen durchströmt. Nach 24 Stunden wird aus der Prüfkammerluft Proben entnommen. Tenax-Adsorptionsröhrchen dienen dabei der Absorption der VOC Stoffe. Das Tenax Röhrchen wird anschließend erhitzt und die dabei freigesetzten flüchtigen Substanzen mit Hilfe eines Inertgas-Stromes in einer Kühlfalle eines Temperatur-programmierbaren Verdampfers kryofokusiert. Nach Beendigung der Ausheizphase wird die Kühlfalle rasch auf 280°C erhitzt. Dabei verdampfen die fokussierten Substanzen. Sie werden anschließend in der gaschromatographischen Trennsäule aufgetrennt und massenspektrometrisch detektiert. Durch Kalibration mit Bezugssubstanzen ist eine halbquantitative Abschätzung der Emission, ausgedrückt in "µg/m³", möglich. Als quantitative Bezugssubstanzen werden Toluol für die VOC-Analyse (VOC-Wert) verwendet. Anhand ihrer Massenspektren und Retentionsindizes können Signalpeaks Substanzen zugeordnet werden. Es wird das folgendes Gerät für die Analyse verwendet: Fa. Gerstel, D-45473 Mühlheim an der Ruhr, Eberhard-Gerstel-Platz 1, TDS-3 / KAS-4, Tenax^{®}-Desorptionsröhrchen, Agilent Technologies 7890A (GC) / 5975C (MS), Säule: HP Ultra2 (50m, 0,32mm, 0,52µm), Trägergas: Helium. Genauere Durchführungsbestimmungen können dabei der DIN EN ISO 16000-9:2008-04 entnommen werden.

### ERGEBNISSE:

Stickstoffgehalt der eingesetzten Vernetzer/ vernetzenden Additive:
DABCO^{®} DEOA LF: 11,3%
Diisopropanolamin: 10,5%
ORTEGOL^{®} 204: 6,1%
Diglycerol: 0%
Stickstoffarme Vernetzermischung: 0%

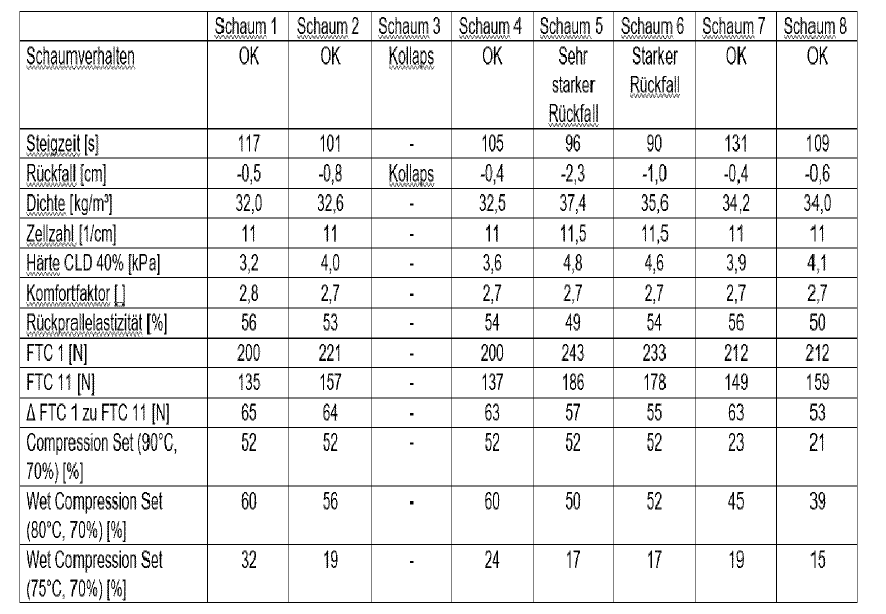

| | Schaum 9 | Schaum 10 |
|---|---|---|
| Schaumverhalten | | |
| Steigzeit [s] | 129 | 131 |
| Rückfall [cm] | -0,6 | -0,6 |
| Dichte [kg/m³] | 32,5 | 32,6 |
| Zellzahl [1/cm] | 11 | 10 |

VOC Ergebnisse der emissionsoptimierten Kaltweichschaumstoff-Formulierung:

**Schaum mit DEOA (Schaum 9):**

| Retentionszeit | Fläche | Konzentration | |
|---|---|---|---|
| [min] | | als Toluoläquivalente | |
| | | | |
| 5,8 | 880941 | 2 µg/m³ | Benzol |
| 6,3 | 365985 | <1 µg/m³ | |
| 9,6 | 418430 | <1 µg/m³ | |
| 12,4 | 54422418 | 113 µg/m³ | Styrol |
| 18,9 | 66193025 | 137 µg/m³ | 3-(Diethylamino)-propanenitril |
| 22,6 | 5887884 | 12 µg/m³ | |
| 24,3 | 521489 | 1 µg/m³ | |
| 25,5 | 778835 | 2 µg/m³ | |
| 28,6 | 5765765 | 12 µg/m³ | |
| 29,0 | 2519745 | 5 µg/m³ | |
| 29,2 | 3256023 | 7 µg/m³ | |
| 29,3 | 1799679 | 4 µg/m³ | |
| 29,9 | 695525 | 1 µg/m³ | |
| 30,1 | 399065 | <1 µg/m³ | |
| 34,0 | 351318 | <1 µg/m³ | |
| | | | |
| | **Summe** | **300 µg/m³** | |

**Schaum mit der stickstoffarmen Vernetzermischung (Schaum 10):**

| Retentionszeit | Fläche | Konzentration | |
|---|---|---|---|
| [min] | | als Toluoläquivalent | |
| | | | |
| 5,8 | 432470 | <1 µg/m³ | |
| 6,3 | 514380 | 1 µg/m³ | |
| 9,6 | 523362 | 1 µg/m³ | |
| 12,4 | 56565489 | 117 µg/m³ | Styrol |
| 18,9 | 71284866 | 148 µg/m³ | 3-(Diethylamino)-propanenitril |
| 21,4 | 644699 | 1 µg/m³ | |
| 22,6 | 6030888 | 12 µg/m³ | |
| 24,3 | 567404 | 1 µg/m³ | |
| 25,5 | 835242 | 2 µg/m³ | |
| 28,6 | 6176953 | 13 µg/m³ | |
| 29,0 | 2519258 | 5 µg/m³ | |
| 29,2 | 3161609 | 7 µg/m³ | |
| 29,3 | 1583225 | 3 µg/m³ | |
| 29,9 | 651729 | 1 µg/m³ | |
| 30,1 | 430349 | <1 µg/m³ | |
| 34,0 | 349661 | <1 µg/m³ | |
| | | | |
| | **Summe** | **320 µg/m³** | |

### Beschreibung der Ergebnisse:

In der Analyse des Stickstoffgehaltes der eingesetzten vernetzenden Additive zeigt sich, daß DEOA, Diisopropanolamin und ORTEGOL 204 stickstoffhaltig sind (≥ 0,5 Gew % N). Die erfindungsgemäße stickstoffarme Vernetzermischung ist nicht stickstoffhaltig (≤ 0,5 Gew. % N).

In der Verschäumung von Formulierungen enthaltend die verschiedenen Additive wurde als Referenz gemäß dem Stand der Technik eine Schaumformulierung mit DEOA (Schaum 1) hergestellt. Der sich bildende Schaum ist dabei stabil und zeigt nur leichten Rückfall. Dichte und auch Zellzahl des gebildeten Kaltschaumstoffs sind im erwarteten Bereich. Komfortfaktor und Rückprallelastizität weisen den gebildeten Schaumstoff als Kaltschaumstoff aus. Die Alterungseigenschaften im trockenen Zustand (Compression Set) und im feuchten Zustand (Wet Compression Set) weisen die typischen Werte aus, die als problematisch anzusehen sind. So bedeutet ein Compression Set (90°C, 70%) von 52 %, dass die Probe nach der Komprimierung im Mittelwert noch nicht einmal die Hälfte der ursprünglichen Höhe wiedererlangt. Als weiterer Vergleich wurde ein Schaum ohne zusätzlichen Vernetzer hergestellt (Schaum 3). Dieser Schaum kollabiert und ist somit nicht stabil. Die Anwesenheit eines vernetzenden Additivs ist somit für die Stabilität der Formulierung unerlässlich. Anstelle des Diethanolamins können erfolgreich Kaltschaumstoffe auch mit anderen stickstoffhaltigen Vernetzern hergestellt werden. So ist bei Schaum 2 anstelle von DEOA Diisopropanolamin verwendet worden. Der gebildete Kaltschaumstoff weist gegenüber Schaum 1 mit DEOA sehr ähnliche Eigenschaften auf. Rückfall, Dichte und auch Zellzahl bewegen sich im normalen Bereich. Aber auch die Alterungseigenschaften weisen ähnlich schlechte Werte wie bei DEOA auf. Eine Verbesserung des Alterungsverhaltens wird somit nicht beobachtet. Ein ebenfalls vernetzendes Additiv zur Bekämpfung von Cold Flow - ORTEGOL 204- resultiert beim alleinigen Einsatz in einem ungewöhnlich hohen Rückfall (- 2,3 cm) (Schaum 5). Dies ist ein klarer Hinweis darauf, dass das Produkt als Vernetzer zur Erzielung einer ausreichenden Stabilität des aufsteigenden Kaltschaumstoffs nur bedingt geeignet ist. Dies zeigt sich auch noch, wenn die Einsatzmenge des ORTEGOL 204 von 1,3 Teile auf 1,6 Teile erhöht wird (Schaum 6). Der Rückfall nähert sich dann mit - 1,0 cm jedoch normalen Werten. Die niedrigere Stabilität der Formulierung nur mit ORTEGOL 204 äußert sich auch in einer ungewöhnlich hohen Dichte des Schaumstoffs. In der technischen Praxis wird daher ORTEGOL 204 nicht als alleiniger Vernetzer sondern zusammen mit Vernetzern wie z.B. DEOA verwendet. Schaum 4 demonstriert diese Vorgehensweise. ORTEGOL 204 enthält 6,1 % Stickstoff. Die resultierenden Alterungseigenschaften sind hinsichtlich Compression Set denen mit DEOA vergleichbar. Bei der Feucht-Wärme-Alterung (Wet Compression Set) zeigt sich dagegen eine leichte Verbesserung. Zuletzt wurden die erfindungsgemäßen stickstofffreien Vernetzer (≤ 0,5 Gew. % N) getestet. Hierbei kamen Diglycerol (Schaum 7) und eine stickstoffarme Vernetzermischung zum Einsatz. (Schaum 8). Rückfälle, Dichten und Zellzahlen sind dabei im akzeptablen Bereich, wenngleich gegenüber reinem DEOA in dieser Formulierung eine leichte Verschlechterung feststellbar ist. Eine signifikante Verbesserung wird bei der Trocken-Wärme-Alterung (Compression Set) bei 90°C, 70% Kompression detektiert. Auch bei der Feucht-Wärme-Alterung (Wet Compression Set) wird bei beiden Temperaturen eine ganz erhebliche Verbesserung beobachtet. Die stickstoffarme Vernetzermischung ist dabei reinem Diglycerol überlegen. Die Unterschiede in den Alterungseigenschaften können dabei nicht mit unterschiedlichen Porositäten oder Zellzahlen der gebildeten Schaumproben erklärt werden, da die ΔFTC Werte recht vergleichbar sind. Insgesamt zeigt sich durch Einsatz der stickstoffarmen Vernetzer eine Verbesserung des Druckverformungsrestes in trockenem wie feuchten Zustand und belegt damit signifikant verbesserte Alterungseigenschaften.
Formulierungen des Typs Schaum 1 bis Schaum 8 können dabei durch Austausch der verwendeten Katalysatoren auch emissionsarm hergestellt werden, wie aus den gemessenen VOC-Prüfkammerergebnissen ersichtlich ist. Dabei sind beide Prüfkammerergebnisse unter dem kritischen Wert für die Summe von flüchtigen organischen Substanzen von 500 µg/m³ und somit emissionsarm.

## Patentansprüche

1. Verfahren zur Herstellung von PU-Kaltblockweichschaumstoffen durch Umsetzung mindestens einer Polyolkomponente und mindestens einer Isocyanatkomponente in Gegenwart von Wasser sowie mindestens eines Katalysators, umfassend zumindest einen Zinnkatalysator, und mindestens eines Vernetzers, **dadurch gekennzeichnet, dass** keine stickstoffhaltigen Vernetzer mit einer erweiterten OH-Zahl über 1000 mg KOH/g in einer Gesamtmenge > 0,5 Gew.-Teilen, vorzugsweise > 0,1 Gew.-Teilen, bezogen auf 100 Gew.-Teile Polyol, eingesetzt werden,
wobei stickstoffhaltige Vernetzer im Sinne dieser Erfindung einen Stickstoffgehalt von > 0,5 Gew.-% aufweisen, gemessen durch Kjeldahl-Analyse, Gew.-% bezogen auf den jeweiligen Vernetzer,
und wobei zumindest zwei stickstofffreie oder stickstoffarme Vernetzer mit einem Stickstoffgehalt von ≤ 0,5 Gew.-%, gemessen durch Kjeldahl-Analyse, Gew.-% bezogen auf den jeweiligen Vernetzer, in einer Gesamtmenge ≥ 0,1 Gew.-Teilen, vorzugsweise ≥ 0,1 bis 5 Gew.-Teilen, bevorzugt 0,2 bis 3 Gew.-Teilen, insbesondere 0,5 bis 2 Gew.-Teilen , bezogen auf 100 Gew.-Teile Polyol, eingesetzt werden,
und wobei maximal 4 Teile Wasser pro 100 Teile Polyol eingesetzt werden,
und wobei, bezogen auf die gesamte Polyolkomponente, > 50 Gew.-% Kaltweichschaum-Ether-Polyole mit Molmassen von > 1500 g/mol pro OH-Gruppe eingesetzt werden,
und wobei der einzelne Vernetzer eine Funktionalität von gegenüber dem Isocyanat reaktiven Gruppen von ≥3 aufweist,
und wobei als Isocyanatkomponenten geeignete Isocyanate alle Isocyanate sind, die mindestens zwei Isocyanat-Gruppen enthalten
und wobei der Isocyanatindex > 95 und ≤ 115 ist,
und wobei bevorzugt weniger als 2 Teile, vorzugsweise kein Polyesterether mit einer OH-Zahl von 55 bis 57 mgKOH/g pro 100 Teile Polyol eingesetzt wird.

2. Verfahren gemäß Anspruch 1, **dadurch gekennzeichnet, dass** zumindest zwei stickstofffreie oder stickstoffarme Vernetzer mit einem Stickstoffgehalt von ≤ 0,5 Gew.-%, gemessen durch Kjeldahl-Analyse, Gew.-% bezogen auf den jeweiligen Vernetzer, eingesetzt werden aus der Gruppe der
(a) Zuckeralkohole, bevorzugt umfassend Sorbitol, Mannitol, Maltitol, Isomalt, Lactitol, Xylitol, Threit, Erythrit und/oder Arabit, insbesondere Sorbitol und/oder Maltitol,
(b) Glycerin(derivat)e, bevorzugt umfassend Glycerin, Diglycerin und/oder Triglycerin, insbesondere Diglycerin und/oder Triglycerin,
und/oder
(c) weiterer niedermolekulare stickstofffreier oder stickstoffarmer Vernetzer wie Pentaerythrit und/oder 1,1,1-Trimethylolpropan,
wobei es bevorzugt ist, dass zumindest ein stickstofffreier oder stickstoffarmer Vernetzer aus der Gruppe der Zuckeralkohole (a) und zumindest ein stickstofffreier oder stickstoffarmer Vernetzer aus der Gruppe der Glycerin(derivat)e (b) eingesetzt werden,
und wobei es besonders bevorzugt ist, dass Sorbitol und/oder Maltitol sowie zusätzlich Diglycerin und/oder Triglycerin eingesetzt werden.

3. Verfahren gemäß einem der Ansprüche 1 oder 2, **dadurch gekennzeichnet, dass** der Vernetzer als lösungsmittelhaltiges, vorzugsweise wasserhaltiges Additiv eingesetzt wird, umfassend > 0 bis 50 Gew.-% Lösungsmittel, vorzugsweise Wasser, sowie 50 bis <100 Gew.-% Vernetzer, umfassend zumindest zwei stickstofffreie oder stickstoffarme Vernetzer mit einem Stickstoffgehalt von ≤ 0,5 Gew.-%, gemessen durch Kjeldahl-Analyse, Gew.-% bezogen auf den jeweiligen Vernetzer, wobei als Vernetzer vorzugsweise Zuckeralkohol(e), Glycerin(derivat)e, und/oder weitere niedermolekulare stickstofffreie oder stickstoffarme Vernetzer umfasst sind,
bevorzugt aber zumindest einen stickstofffreien oder stickstoffarmen Vernetzer aus der Gruppe der Zuckeralkohole und zumindest einen stickstofffreien oder stickstoffarmen Vernetzer aus der Gruppe der Glycerin(derivat)e, besonders bevorzugt Sorbitol und/oder Maltitol sowie zusätzlich Diglycerin und/oder Triglycerin.

4. Verfahren nach einem der Ansprüche 1 bis 3, **dadurch gekennzeichnet, dass** zumindest 50 Gew.-% der insgesamt eingesetzten Polyole der Polyolkomponente eine Funktionalität von 2,5 bis 4, zahlengemittelte Molekulargewichte bestimmt durch Gelpermeationschromatographie im Bereich von 4500 bis 8000 g/mol aufweisen und vorzugsweise > 50%, insbesondere mindestens 70% bis zu 95%, primäre Hydroxylgruppen aufweisen.

5. Verfahren nach einem der Ansprüche 1 bis 4, **dadurch gekennzeichnet, dass** Kaltschaum-Polymerpolyole eingesetzt werden.

6. PU-Kaltblockweichschaumstoff, vorzugsweise Matratze oder Kissen, erhältlich nach einem Verfahren gemäß einem der Ansprüche 1 bis 5.

7. PU-Kaltblockweichschaumstoff nach Anspruch 6, **dadurch gekennzeichnet, dass** der PU-Schaumstoff-Körper, bezogen auf sein Ausgangsvolumen um mindestens 20%, vorzugsweise 30%, insbesondere 40% komprimiert wurde und von einem Hilfsmittel, insbesondere Verpackungsmittel, für mindestens 20 Stunden in komprimierter Form gehalten wird.

8. Vernetzendes lösungsmittelhaltiges, vorzugsweise wasserhaltiges Additiv für den Einsatz in PU-Kaltblockweichschaumformulierungen, umfassend > 0 bis 50 Gew.-% Lösungsmittel, vorzugsweise Wasser, sowie 50 bis < 100 Gew.-% Vernetzer, umfassend zumindest zwei stickstofffreie oder stickstoffarme Vernetzer mit einem Stickstoffgehalt von ≤ 0,5 Gew.-%, gemessen durch Kjeldahl-Analyse, Gew.-% bezogen auf den jeweiligen Vernetzer, dabei als Vernetzer vorzugsweise umfassend Zuckeralkohol(e), und/oder Glycerin(derivat)e, bevorzugt aber zumindest einen Vernetzer aus der Gruppe der Zuckeralkohole und zumindest einen Vernetzer aus der Gruppe der Glycerin(derivat)e, besonders bevorzugt Sorbitol und/oder Maltitol sowie zusätzlich Diglycerin und/oder Triglycerin, mit der Maßgabe, dass keine stickstoffhaltigen Vernetzer mit einer erweiterten OH-Zahl über 1000 mg KOH/g in einer Gesamtmenge > 5 Gew.-%, vorzugsweise > 1 Gew.-%, insbesondere > 0,1 Gew.-Teilen, bezogen auf 100 Gew.-% des lösungsmittelhaltigen Additivs enthalten sind.

9. Verwendung von PU-Kaltblockweichschaumstoff, erhältlich nach einem Verfahren gemäß einem der Ansprüche 1 bis 5, in Matratzen und/oder Kissen, insbesondere Matratzen, zur Bereitstellung von Matratzen und/oder Kissen mit verbesserten Alterungs-, Dauergebrauchsund Kompressionseigenschaften sowie verbesserter Dimensionswiedererlangung nach Kompression, insbesondere mit zusätzlich verbessertem Emissionsverhalten.

10. Verwendung eines Additivs für den Einsatz in Kaltblockweichschaumformulierungen gemäß Anspruch 8 zur Verbesserung der Compression-Set-Werte der gebildeten Polyurethan-Kaltblockweichschaumstoffe, insbesondere zur Realisierung verbesserter Alterungs-, Dauergebrauchs- und Kompressionseigenschaften sowie verbesserter Dimensionswiedererlangung nach Kompression.
